(19) Europäisches Patentamt
European Patent Office
Office européen des brevets

(11) **EP 3 076 281 A1**

(12) **EUROPEAN PATENT APPLICATION**

(43) Date of publication:
**05.10.2016 Bulletin 2016/40**

(51) Int Cl.:
***G06F 3/0488*** (2013.01) ***G06F 3/0482*** (2013.01)

(21) Application number: **16163157.7**

(22) Date of filing: **31.03.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **31.03.2015 KR 20150045792**

(71) Applicant: **Samsung Electronics Co., Ltd.**
**Suwon-si, Gyeonggi-do (KR)**

(72) Inventors:
• Lee, Ji-Eun
  **Suwon-si, Gyeonggi-do (KR)**
• Yoon, Boo-Keun
  **Yongin-si, Gyeonggi-do (KR)**
• Lee, Mun Keun
  **Yongin-si, Gyeonggi-do (KR)**
• Lee, Min Su
  **Gyeonggi-do (KR)**

(74) Representative: **Gulde & Partner**
**Patent- und Rechtsanwaltskanzlei mbB**
**Wallstraße 58/59**
**10179 Berlin (DE)**

(54) **ELECTRONIC DEVICE AND METHOD OF DISPLAYING THE SAME**

(57)     A displaying method of an electronic device including a touch-sensitive display includes displaying a screen including a first image object disposed in an upper portion of the touch-sensitive display and a second image object disposed in a lower portion thereof; and displaying a hidden menu on at least a portion of the screen when a predetermined touch input is received via the touch-sensitive display, wherein the hidden menu may include the first image object.

**FIG. 1**

EP 3 076 281 A1

# Description

## BACKGROUND

### 1. Field

The present disclosure relates to an electronic device and a method of displaying the same, and more particularly, to an electronic device including a user interface that interacts with a user and a method of displaying the same.

### 2. Description of the Related Art

Generally, an electronic device includes a display for displaying information requested by a user. For example, a refrigerator includes a display for displaying a temperature of a storage compartment and an operation mode of the refrigerator, and an air conditioner includes a display for displaying a temperature of a space being air-conditioned and an operation mode of the air conditioner. The display not only allows a user to easily acquire image information using a graphic user interface but also allows the user to intuitively input a control command using a touch panel. In other words, nowadays, the display not only serves to display information but also serves to input information.

In addition, an electronic device sometimes includes a large display for providing a large amount of information to a user.

In this way, the large display can simultaneously provide a large amount of information to the user, but some users may find inputting a control command via the large display difficult. For example, when a user is a child with a short height or is disabled, the user may face inconvenience in using a launcher icon displayed in an upper portion of the large display.

## SUMMARY

Thus, it is an aspect of the present disclosure to provide an electronic device and a method of displaying the same in which a user may easily use a launcher icon displayed in an upper portion of a display.

It is another aspect of the present disclosure to provide an electronic device and a method of displaying the same capable of providing different screens in accordance with whether a user is an adult or a child.

According to an aspect of the present disclosure, a method of displaying an electronic device including a touch-sensitive display includes displaying a screen including a first image object disposed in an upper portion of the touch-sensitive display and a second image object disposed in a lower portion thereof; and displaying a hidden menu on at least a portion of the screen when a predetermined touch input is received via the touch-sensitive display, wherein the hidden menu may include the first image object.

In accordance with embodiments, the displaying of the hidden menu in at least a portion of the screen may include displaying the hidden menu in the lower portion of the screen.

In accordance with embodiments, the method of displaying may further include deactivating the touch input in areas of the screen besides the hidden menu.

In accordance with embodiments, the displaying of the hidden menu in at least a portion of the screen when a predetermined touch input is received may include, when a touch is detected in a predetermined first region and a position of the touch is moved, moving the hidden menu along with a movement of the position of the touch.

In accordance with embodiments, the first region may include an edge portion of the screen.

In accordance with embodiments, the movement of the position of the touch may include a movement of the position of the touch from the edge portion of the screen to the central portion of the screen.

In accordance with embodiments, the displaying of the hidden menu in at least a portion of the screen when a predetermined touch input is received may further include displaying the hidden menu in at least a portion of the screen when the position of the touch reaches a predetermined second region.

In accordance with embodiments, the displaying of the hidden menu in at least a portion of the screen when a predetermined touch input is received may further include displaying the hidden menu in at least a portion of the screen when the position of the touch moves by a predetermined distance.

In accordance with embodiments, the displaying of the hidden menu in at least a portion of the screen when a predetermined touch input is received may include moving the hidden menu along with coordinates of the touch input.

According to an aspect of the present disclosure, an electronic device includes a touch-sensitive display, at least one processor, and a memory to store at least one program executed by the at least one processor, and the at least one processor is configured to display a screen including a first image object disposed in an upper portion of the touch-sensitive display and a second image object disposed in a lower portion thereof the at least one processor is configured to display a hidden menu on at least a portion of the screen when a predetermined touch input is received via the touch-sensitive display and the hidden menu comprises the first image object.

In accordance with embodiments, the at least one processor is configured to display the hidden menu in the lower portion of the screen.

In accordance with embodiments, the at least one processor is configured to deactivate the touch input in areas of the screen besides the hidden menu.

In accordance with embodiments, when a touch is detected in a predetermined first region of the touch-sensitive display and a position of the touch is moved, the at least one processor is configured to move the hidden menu along with a movement of the position of the touch.

In accordance with embodiments, the first region may include an edge portion of the screen.

In accordance with embodiments, the movement of the position of the touch may include a movement of the position of the touch from the edge portion of the screen to the central portion of the screen.

According to another aspect of the present disclosure, a method of displaying an electronic device includes acquiring a user's characteristic and displaying any one of a first screen and a second screen in accordance with the user's characteristic, wherein a first image object related to an operation of the electronic device and a second image object unrelated to the operation of the electronic device may be randomly disposed on the first screen, and the second image object may be disposed in a second area of the second screen.

In accordance with embodiments, the first image object may be disposed in a first area of the second screen.

In accordance with embodiments, the acquiring of the user's characteristic may include acquiring the user's voice, and the displaying of any one of the first screen and the second screen based on the user's characteristic may include displaying the first screen when the user belongs to a first group in accordance with the user's voice and displaying the second screen when the user belongs to a second group in accordance with the user's voice.

In accordance with embodiments, the acquiring of the user's characteristic may include acquiring the user's height, and the displaying of any one of the first screen and the second screen based on the user's characteristic may include displaying the first screen when the user's height is equal to or greater than a reference height and displaying the second screen when the user's height is smaller than the reference height.

In accordance with embodiments, the acquiring of the user's characteristic may include acquiring the user's hand size, and the displaying of any one of the first screen and the second screen based on the user's characteristic may include displaying the first screen when the user's hand size is equal to or larger than a reference size and displaying the second screen when the user's hand size is smaller than the reference size.

According to another aspect of the present disclosure, an electronic device may include a display, a user recognition unit to acquire a user's characteristic, and a control unit to display any one of a first screen and a second screen on the display in accordance with the user's characteristic, wherein a first image object related to an operation of the electronic device and a second image object unrelated to the operation of the electronic device may be randomly disposed on the first screen, and the second image object may be disposed in a second area of the second screen.

In accordance with embodiments, the first image object may be disposed in a first area of the second screen.

In accordance with embodiments, the user recognition unit may include a microphone to acquire the user's voice, and the control unit may display the first screen on the display when the user belongs to a first group in accordance with the user's voice and display the second screen when the user belongs to a second group in accordance with the user's voice.

In accordance with embodiments, the control unit may determine the user's height based on an output of the user recognition unit and display the first screen on the display when the user's height is equal to or greater than a reference height and display the second screen on the display when the user's height is smaller than the reference height.

In accordance with embodiments, the user recognition unit may include a plurality of infrared sensors installed at different heights to detect infrared rays radiated from the user, and the control unit may determine the user's height in accordance with the height at which at least one infrared sensor is installed to detect the infrared rays.

In accordance with embodiments, the user recognition unit may include a plurality of ultrasonic sensors installed at different heights to acquire information on a distance up to the user, and the control unit may determine the user's height based on the acquired information on the distance up to the user.

In accordance with embodiments, the user recognition unit may include a camera to acquire image information of the user and an ultrasonic sensor to acquire information on a distance up to the user, and the control unit may determine the user's height based on the image information of the user and the information on the distance up to the user.

BRIEF DESCRIPTION OF THE DRAWINGS

These and/or other aspects of the disclosure will become apparent and more readily appreciated from the following description of the embodiments, taken in conjunction with the accompanying drawings of which:

FIG. 1 illustrates a configuration of an electronic device according to an embodiment;

FIG. 2 illustrates a configuration of a user interface of the electronic device illustrated in FIG. 1;

FIG. 3 illustrates an example in which the user interface illustrated in FIG. 2 is applied to a refrigerator;

FIG. 4 illustrates an example in which the user interface illustrated in FIG. 2 is applied to an air conditioner;

FIG. 5 illustrates an example of a screen displayed on the user interface of the electronic device according to the embodiment;

FIG. 6 illustrates an example of a user using the user interface of the electronic device according to the embodiment;

FIG. 7 illustrates an example of a method of displaying the user interface of the electronic device according to the embodiment;

FIGS. 8, 9A, 9B, 9C, 9D, 10, 11, 12, 13, and 14 illustrate an example of a screen displayed on the user interface in accordance with the controlling method illustrated in FIG. 7;

FIGS. 15, 16, 17, and 18 illustrate another example of a screen displayed on the user interface in accordance with the controlling method illustrated in FIG. 7;

FIGS. 19, 20, 21, and 22 illustrate still another example of a screen displayed on the user interface in accordance with the controlling method illustrated in FIG. 7;

FIG. 23 illustrates another example of a method of displaying the user interface of the electronic device according to the embodiment;

FIGS. 24, 25, 26, and 27 illustrate an example of a screen displayed on the user interface in accordance with the controlling method illustrated in FIG. 23;

FIG. 28 illustrates a configuration of an electronic device according to another embodiment;

FIG. 29 illustrates an example of the electronic device distinguishing a user according to another embodiment;

FIGS. 30 and 31 illustrate another example of the electronic device distinguishing a user according to another embodiment;

FIGS. 32 and 33 illustrate still another example of the electronic device distinguishing a user according to another embodiment;

FIGS. 34, 35, and 36 illustrate yet another example of the electronic device distinguishing a user according to another embodiment;

FIGS. 37, 38, and 39 illustrate yet another example of the electronic device distinguishing a user according to another embodiment;

FIG. 40 illustrates an example of a method of displaying the user interface of the electronic device according to another embodiment;

FIGS. 41, 42A, 42B, 42C, 43, and 44 illustrate an example of a screen displayed on the user interface in accordance with the controlling method illustrated in FIG. 40;

FIG. 45 illustrates another example of a displaying method of the user interface of the electronic device according to another embodiment; and

FIGS. 46, 47, and 48 illustrate an example of a screen displayed on the user interface in accordance with the controlling method illustrated in FIG. 45.

DETAILED DESCRIPTION

Hereinafter, an embodiment of the present disclosure will be described in detail with reference to the accompanying drawings.

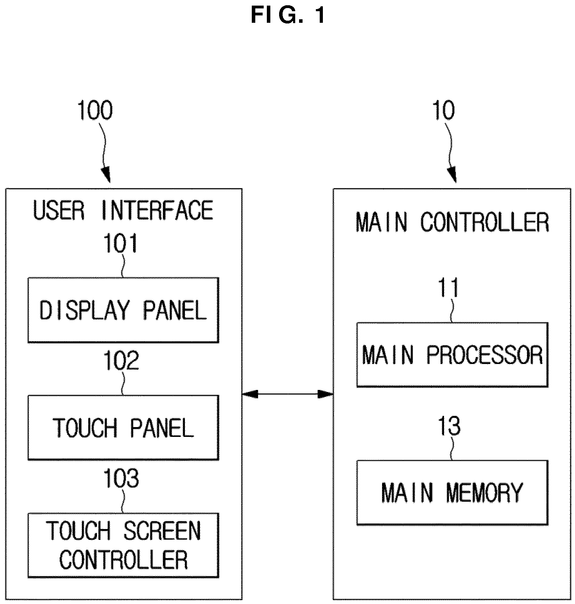

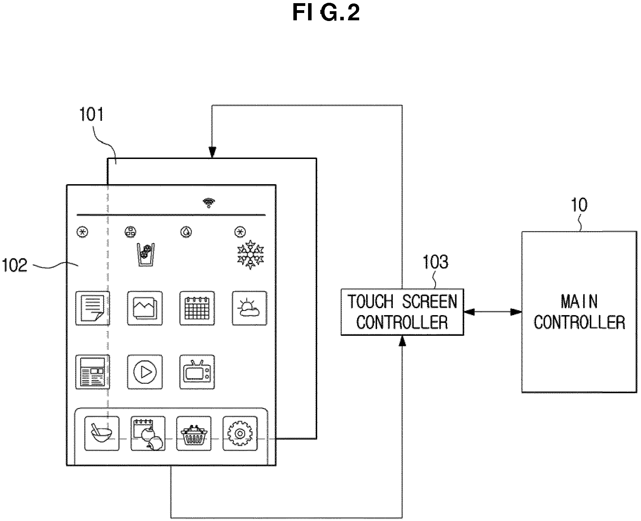

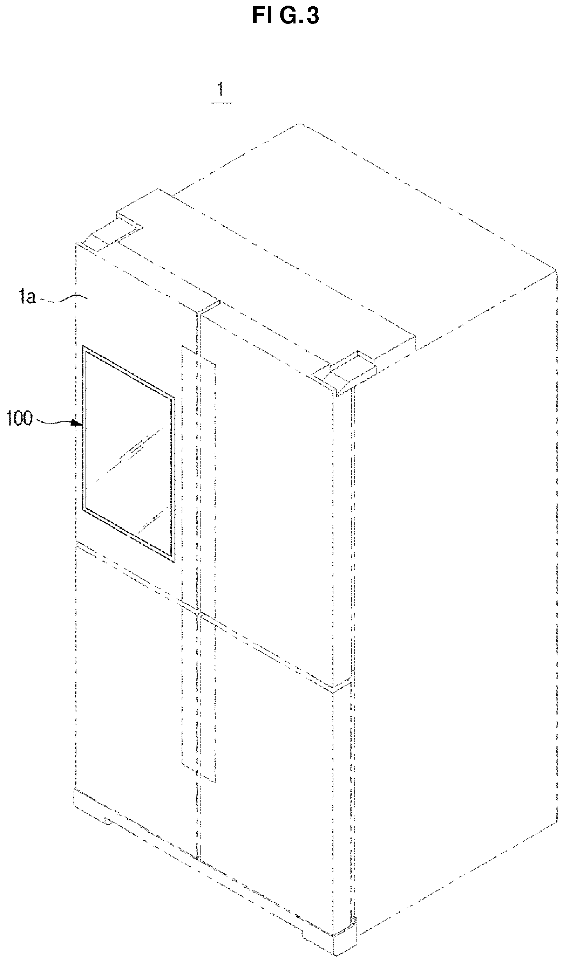

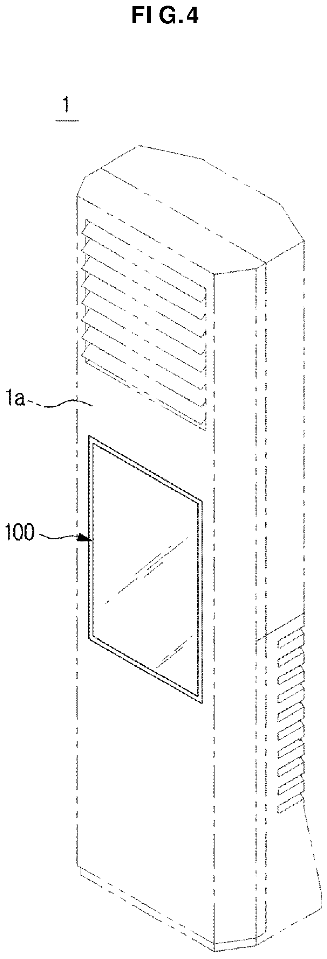

FIG. 1 illustrates a configuration of an electronic device according to an embodiment, and FIG. 2 illustrates a configuration of a user interface of the electronic device illustrated in FIG. 1. In addition, FIG. 3 illustrates an example in which the user interface illustrated in FIG. 2 is applied to a refrigerator, and FIG. 4 illustrates an example in which the user interface illustrated in FIG. 2 is applied to an air conditioner.

Referring to FIGS. 1, 2, 3, and 4, an electronic device 1 may include a user interface 100 to interact with a user and a main controller 10 to control an operation of the electronic device 1. Here, the electronic device 1 may be any device so long as the device can interact with a user via the user interface 100, and the electronic device 1 is not particularly limited. For example, the electronic device 1 may be a refrigerator, a washing machine, an electric oven, a gas oven, an air conditioner, etc.

The user interface 100 may include a display panel 101 to display an image, a touch panel 102 to receive a user's touch input, and a touch screen controller 103 to control the display panel 101 and the touch panel 102.

As illustrated in FIG. 2, the display panel 101 may convert electrical image data of the main controller 10 received via the touch screen controller 103 into an optical image that is visible to the user.

The display panel 101 may employ a cathode ray tube (CRT) display panel, a liquid crystal display (LCD) panel, a light emitting diode (LED) panel, an organic light emitting diode (OLED) panel, a plasma display panel (PDP), a field emission display (FED) panel, etc. Yet, the display panel 101 is not limited to the above, and the display panel 101 may employ various display means capable of visually displaying an optical image corresponding to image data.

As illustrated in FIG. 2, the touch panel 102 may receive a user's touch input and transmit an electrical signal corresponding to the received touch input to the touch screen controller 103.

Specifically, the touch panel 102 detects a user's touch on the touch panel 102 and transmits an electrical signal corresponding to coordinates of the user's touch point to the touch screen controller 103. The touch screen controller 103 may acquire the coordinates of the user's touch point based on the electrical signal received from the touch panel 102, details of which will described later.

In addition, the touch panel 102 may be disposed on an upper surface of the display panel 101. In other words, the touch panel 102 is disposed on a surface on which an image is displayed. Consequently, the touch panel 102 may be formed with a transparent material to prevent distortion of an image displayed on the display panel 101.

The touch panel 102 may employ a resistive layer touch panel or a capacitance touch panel.

A resistive layer touch panel may include one pair of electrodes and an insulation layer between the one pair of electrodes, and the pair of electrodes is insulated by the insulation layer. When the user touches the touch panel, the pair of electrodes insulated by the insulation layer come in contact with each other. As a result, an electrical resistance value between the pair of electrodes changes, and the touch panel may detect the user's touch and output an electrical signal corresponding to coordinates of the user's touch point based on the change in the electrical resistance value.

In addition, a capacitance touch panel may also include one pair of electrodes and an insulation layer between the one pair of electrodes, and the pair of electrodes is insulated by the insulation layer. Capacitance between the pair of electrodes changes when the user touches the touch panel, and the touch panel may detect the user's touch and output an electrical signal corresponding to coordinates of the user's touch point based on the change in the capacitance.

Yet, the touch panel 102 is not limited to the above, and the touch panel 102 may employ various input means capable of detecting a user's touch and outputting an electrical signal corresponding to coordinates of the detected touch point.

The touch screen controller 103 may drive/control operations of the display panel 101 and the touch panel 102. Specifically, the touch screen controller 103 may drive the display panel 101 such that an optical image corresponding to image data received from the main controller 10 is displayed and may control the touch panel 102 to detect coordinates of the user's touch point.

Particularly, the touch screen controller 103 may determine the coordinates of the user's touch point based on the electrical signal output by the touch panel 102 and transmit the coordinates of the user's touch point to the main controller 10.

The touch screen controller 103 may include a memory (not shown) to store a program and data for controlling the operations of the display panel 101 and the touch panel 102 and a processor (not shown) to execute operations for controlling the operation of the touch panel 102 in accordance with the program and the data stored in the memory. Also, the memory and the processor may be provided as separate chips or may be provided as one chip.

As described above, the user interface 100 may receive the user's touch input and display an image corresponding to the user's touch input.

In addition, the user interface 100 may be disposed on a front surface of the electronic device 1. For example, when the electronic device 1 is a refrigerator, the user interface 100 may be disposed at a front door 1 a of the refrigerator as illustrated in FIG. 3. Also, when the electronic device 1 is an air conditioner, the user interface 100 may be disposed at a front plate 1 a of the air conditioner as illustrated in FIG. 4.

In addition, the user interface 100 may include a large display panel 101 of 30 inches or larger and the touch panel 102. The electronic device 1 may provide various contents to the user by displaying pictures, playing videos, etc. using the large user interface 100.

The main controller 10 may include a main memory 13 to store a program and data for controlling an operation of the electronic device 1 and a main processor 11 to execute operations for controlling the operation of the electronic device 1 in accordance with the program and the data stored in the memory 13.

The main memory 13 may store a control program and control data for controlling the operation of the electronic device 1 and recall data output by the main processor 11 and the coordinates of the user's touch point received from the user interface 100.

The main memory 13 may include a volatile memory such as a static random access memory (S-RAM) and a dynamic RAM (D-RAM) and a nonvolatile memory such as a flash memory, a read-only memory (ROM), an erasable programmable ROM (EPROM), and an electrically EPROM (EEPROM). Here, the volatile memory and the nonvolatile memory may be provided as separate chips or provided as one chip.

The nonvolatile memory may serve as an auxiliary memory device of the volatile memory and store a control program and control data for controlling the operation of the electronic device 1. Also, even when power of the electronic device 1 is turned off, the data stored in the nonvolatile memory is preserved.

The volatile memory may load and recall the control program and the control data from the nonvolatile memory or recall the data output by the main processor 11 and the coordinates of the user's touch point received from the user interface 100. Also, when the power of the electronic device 1 is turned off, the data stored in the volatile memory is lost.

The main processor 11 may execute operations for controlling the operation of the user interface 100 in accordance with the control program and the control data stored in the main memory 13. Specifically, the main processor 11 may generate image data corresponding to an image to be displayed on the user interface 100 in accordance with the coordinates of the user's touch point detected by the user interface 100 and transmit the generated image data to the user interface 100.

For example, the main processor 11 may transmit image data to the user interface 100 for the user interface 100 to display a plurality of image objects corresponding to a plurality of control commands, and determine a user's control command based on the coordinates of the user's touch point received from the user interface 100. Specifically, the main processor 11 may determine an image object of the coordinates of the user's touch point based on coordinates at which the plurality of image objects are displayed and the coordinates of the user's touch point received from the user interface 100 and determine a control command corresponding to the corresponding image object.

As above, the main controller 10 may control and manage the configurations included in the electronic device 1, and the operation of the electronic device 1 to be described below may be construed as being due to the controlling operation of the main controller 10.

In addition, the main memory 13 and the main processor 11 may be provided as separate chips or may be provided as one chip.

In addition to the above, the electronic device 1 may include various configurations depending on functions.

For example, when the electronic device 1 is a refrigerator, the electronic device 1 may further include a temperature sensor (not shown) to detect a temperature of a storage compartment in which food is stored, a humidity sensor (not shown) to detect a humidity level of the storage compartment, a heat exchanger (not shown) and a compressor (not shown) to supply cold air to the storage compartment, etc. Also, the main controller 10 of the electronic device 1 may control an operation of the compressor in accordance with the temperature of the storage compartment detected by the temperature sensor and the humidity level of the storage compartment detected by the humidity sensor.

In addition, when the electronic device 1 is an air conditioner, the electronic device 1 may further include a temperature sensor (not shown) to detect a temperature of a space being air-conditioned, a humidity sensor (not shown) to detect a humidity level of the space being air-conditioned, a heat exchanger (not shown) and a compressor (not shown) to supply cold air or warm air to the space being air-conditioned, etc. Also, the main controller 10 of the electronic device 1 may control an operation of the compressor in accordance with the temperature of the space being air-conditioned detected by the temperature sensor and the humidity level of the space being air-conditioned detected by the humidity sensor.

In the above, a configuration of the electronic device 1 has been described. As described above, the electronic device 1 is not limited to a refrigerator and an air conditioner and may be any device including a user interface for interacting with a user.

Yet, hereinafter, it will be assumed that the electronic device 1 is a refrigerator to assist in an understanding of the present disclosure.

Hereinafter, the operation of the electronic device 1, particularly, the operation of the user interface 100 will be described.

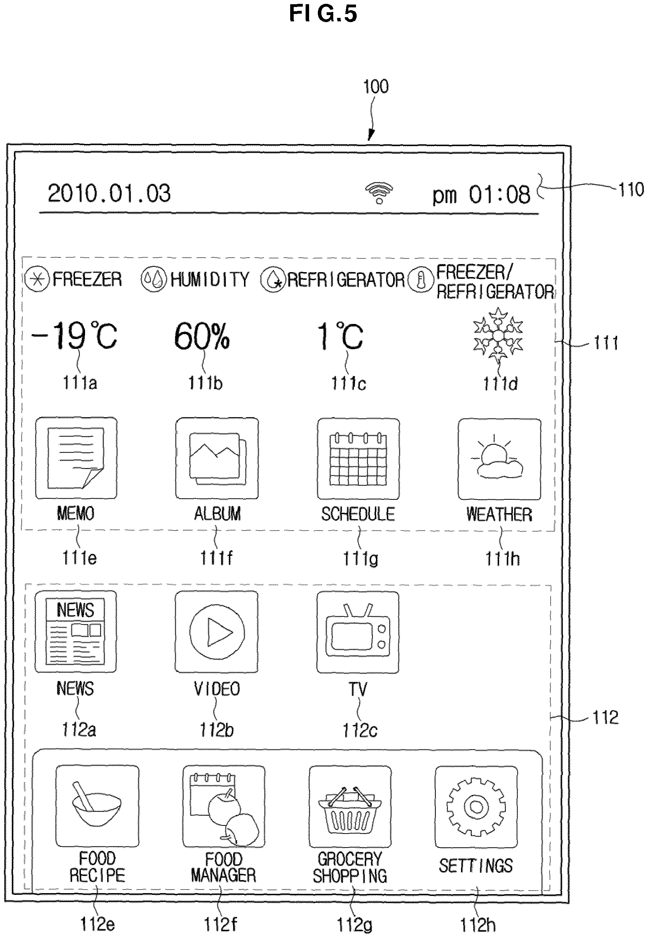

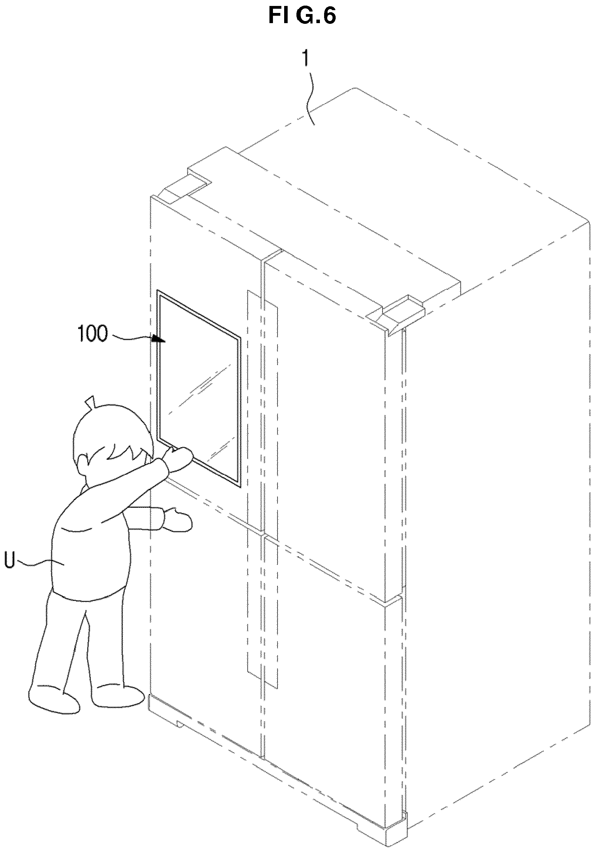

FIG. 5 illustrates an example of a screen displayed on the user interface of the electronic device according to the embodiment, and FIG. 6 illustrates an example of a user using the user interface of the electronic device according to the embodiment. Specifically, FIG. 5 illustrates a home screen of the user interface.

The user interface 100 of the electronic device 1 may display a home screen 110 as illustrated in FIG. 5.

When power is supplied to the electronic device 1, the user interface 100 is turned on, or the user inputs a screen display command, the home screen 110 of the user interface 100 may be displayed.

Various image objects may be displayed on the home screen 110. Here, an image object refers to an independent object displayed on the display panel 101 of the user interface 100. Specifically, the image objects may include launcher icons to execute particular applications, pictures showing stopped images, videos showing images changing according to time, key pads for inputting letters and marks, etc.

The launcher icons may be classified into a plurality of groups in accordance with applications executed by the launcher icons.

For example, the launcher icons may be classified into a first launcher icon group to execute applications directly related to an operation of the electronic device 1, a second launcher icon group to assist in the operation of the electronic device 1 or execute applications indirectly related to the operation of the electronic device 1, and a third launcher icon group to execute applications not related to the operation of the electronic device 1 that provide fun to or draw an interest from the user.

When the electronic device 1 is a refrigerator, the first launcher icon group may include launcher icons to execute applications for setting a target temperature of a storage compartment equipped in the refrigerator, and the second launcher icon group may include launcher icons to execute applications to manage food stored in the refrigerator. Also, the third launcher icon group may include launcher icons to execute an application to input or display a memo, an application to display a picture, an application to display a schedule input by a user, etc.

The image objects may be aligned and disposed on the home screen 110.

Temperature setting launcher icons 111 a, 111 c, and 111 d for setting target temperatures of a freezer compartment (a storage compartment to keep food frozen), a refrigerator compartment (a storage compartment to keep food refrigerated) and a freezer/refrigerator compartment (a storage compartment to keep food frozen or refrigerated) and a humidity setting launcher icon 111b for setting a humidity level of the storage compartments (the freezer compartment, the refrigerator compartment, and the freezer/refrigerator compartment) may be disposed in a first area 111 of the home screen 110.

Each of the temperature setting launcher icons 111a, 111c, and 111d may display a temperature of the freezer compartment, a temperature of the refrigerator compartment, and a temperature of the freezer/refrigerator compartment, respectively. Also, the temperature setting launcher icons 111a, 111c, and 111d may display the temperatures with numerical values or display the temperatures by a circular band or a rod-shaped band.

When a user U selects the temperature setting launcher icons 111a, 111c, or 111d, the user U may set the temperatures of the freezer compartment, the refrigerator compartment, or the freezer/refrigerator compartment.

The humidity setting launcher icon 111b may display a humidity level of the refrigerator compartment or display an overall humidity level of the freezer compartment, the refrigerator compartment, and the freezer/refrigerator compartment, etc. The humidity setting launcher icon 111 b may display the humidity level with a numerical value, and a degree to which a set humidity level is reached may be recognized by a circular band or a rod-shaped band at a surrounding portion thereof. For example, when a humidity level is set to be 75% when the current humidity level is 60%, time required for reaching the set humidity level or a degree to which the set humidity level is reached may be displayed in a surrounding portion of the humidity setting launcher icon 111 b.

When the humidity setting launcher icon 111b is selected, the user U may directly set an inner humidity level of the refrigerator or set the humidity level of each of the storage compartments to be appropriately maintained in an automatic constant humidity control mode.

In addition, a memo launcher icon 111e to execute a memo application for inputting/displaying a memo, an album launcher icon 111f to execute an album application for displaying pictures, a schedule launcher icon 111g to execute a schedule application for displaying a schedule input by the user, and a weather launcher icon 111h to execute a weather application for acquiring and displaying weather information may further be disposed in the first area 111 of the home screen 110.

A news launcher icon 112a to execute a news application for acquiring and displaying the latest news, a video launcher icon 112b to execute a video application for playing a video, and a broadcast launcher icon 112c to execute a broadcast application for receiving a broadcast signal and outputting images and sound of the received broadcast signal, etc. may be disposed in the second area 112 of the home screen 110. Also, a food recipe launcher icon 112e to execute a food recipe application for offering a method of cooking food materials, a food manager launcher icon 112f to execute a food manager application for displaying/managing food stored in the refrigerator, a grocery shopping launcher icon 112g to execute a grocery shopping application for buying food materials or food, and a setting launcher icon 112h to execute a setting application for setting various types of functions of the refrigerator may be disposed in the second area 112 of the home screen 110.

Yet, the arrangement of the launcher icons displayed on the home screen 110 of the user interface 100 is not limited to that illustrated in FIG. 5, and the launcher icons of the home screen 110 may be disposed at random positions or may be disposed at positions set by the user.

In addition, although it has been described above that the first area 111 includes the temperature setting launcher icons 111a, 111c, and 111d, the humidity setting launcher icon 111b, the memo launcher icon 111e, the album launcher icon 111f, the schedule launcher icon 111 g, and the weather launcher icon 111 h, and the second area 112 includes the news launcher icon 112a, the video launcher icon 112b, the broadcast launcher icon 112c, the food recipe launcher icon 112e, the food manager launcher icon 112f, the grocery shopping launcher icon 112g, and the setting launcher icon 112h, embodiments are not limited thereto. Also, although it is illustrated in FIG. 5 that the first area 111 includes an upper half of the home screen 110 and the second area 112 includes a lower half of the home screen 110, embodiments are not limited thereto.

For example, the first area 111 may include the temperature setting launcher icons 111 a, 111c, and 111d, the humidity setting launcher icon 111b, the memo launcher icon 111e, the album launcher icon 111f, the schedule launcher icon 111g, the weather launcher icon 111h, the news launcher icon 112a, the video launcher icon 112b, and the broadcast launcher icon 112c, and the second area 112 may include the food recipe launcher icon 112e, the food manager launcher icon 112f, the grocery shopping launcher icon 112g, and the setting launcher icon 112h. In this case, the first area 111 may include an upper 3/4 of the home screen 110 and the second area 112 may include a lower 1/4 of the home screen 110.

In another example, the first area 111 may include the temperature setting launcher icons 111 a, 111c, 111 d, and the humidity setting launcher icon 111b, and the second area 112 may include the memo launcher icon 111 e, the album launcher icon 111f, the schedule launcher icon 111 g, the weather launcher icon 111 h, the news launcher icon 112a, the video launcher icon 112b, the broadcast launcher icon 112c, the food recipe launcher icon 112e, the food manager launcher icon 112f, the grocery shopping launcher icon 112g, and the setting launcher icon 112h. In this case, the first area 111 may include an upper 1/4 of the home screen 110, and the second area 112 may include a lower 3/4 of the home screen 110.

In addition, as described above, the user interface 100 may include the large display panel 101 and the touch panel 102. In this manner, when the user interface 100 includes the large display panel 101 and the touch panel 102, the user may face inconvenience in using the user interface 100.

When the user U is a child as illustrated in FIG. 6, the user U may face inconvenience in using the launcher icons 111a to 111 h disposed in the first area 111 of the home screen 110 of the user interface 100.

In addition, not only when the user U is a child but also when the user U is disabled or is in an emergency in which the user U cannot stand up, the user U may face inconvenience in using the launcher icons 111 a to 111 h disposed in the first area 111 of the user interface 100.

To remove the inconvenience, the electronic device 1 may display the launcher icons 111 a to 111h disposed in the first area 111 of the home screen 110 of the user interface 100 in a lower portion of the home screen 110 of the user interface 100 in accordance with the user's control command or user recognition.

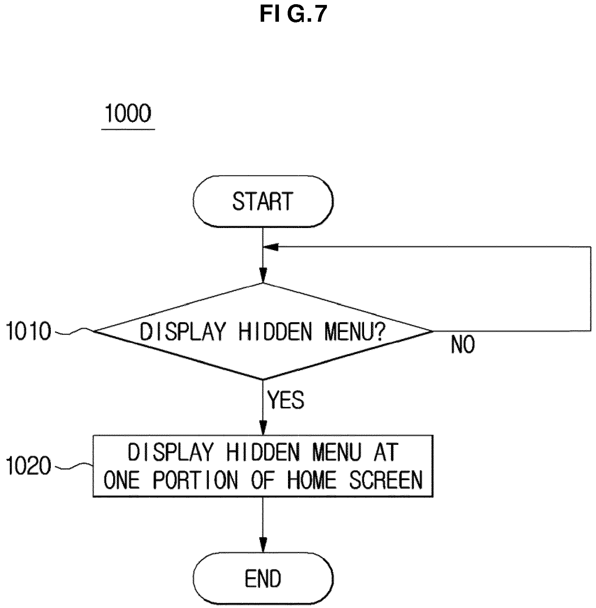

FIG. 7 illustrates an example of a method of displaying the user interface of the electronic device according to the embodiment.

Referring to FIG. 7, a displaying method 1000 of the user interface 100 of the electronic device 1 will be described.

The electronic device 1 determines whether to display a hidden menu of the user interface 100 while being operated (S1010).

Specifically, when the user inputs a hidden menu display command for displaying the hidden menu, the main controller 10 of the electronic device 1 may display the hidden menu on the user interface 100.

Here, the user U may input the hidden menu display command using various methods. For example, to input the hidden menu display command, the user U may touch the user interface 100 and move the touch point, or touch a launcher icon for displaying the hidden menu. Also, the user U may quickly touch the user interface 100 twice or more or touch the user interface 100 and keep touching the user interface 100 for a long time. In addition, the user U may simultaneously touch two or more points.

As described above, the user U may face inconvenience in using the image objects disposed in the upper portion of the user interface 100. To remove the inconvenience, the electronic device 1 may display the hidden menu including the image objects disposed in the upper portion of the user interface 100 on the lower portion of the user interface 100. For example, the hidden menu may include the launcher icons 111a to 111h disposed in the first area 111 of the home screen 110 and may be displayed in the lower portion of the home screen 110. The hidden menu will be described in more detail in the example described below.

When not displaying the hidden menu (NO to S1010), the electronic device 1 continues to perform an operation that has been previously performed.

In addition, when displaying the hidden menu (YES to S1010), the electronic device 1 displays the hidden menu at one portion of the screen of the user interface 100 (S1020).

As described above, the hidden menu may include an image object disposed at a position unreachable by the hand of the user U and, thus, may be disposed at a position reachable by the hand of the user U. For example, the hidden menu may include the launcher icons 111a to 111 h disposed in the first area 111 of the home screen 110 and may be disposed in the lower portion of the home screen 110.

By the hidden menu being displayed as described above, the user U may touch the launcher icons disposed at positions unreachable by hand and use the applications executed by the corresponding launcher icons.

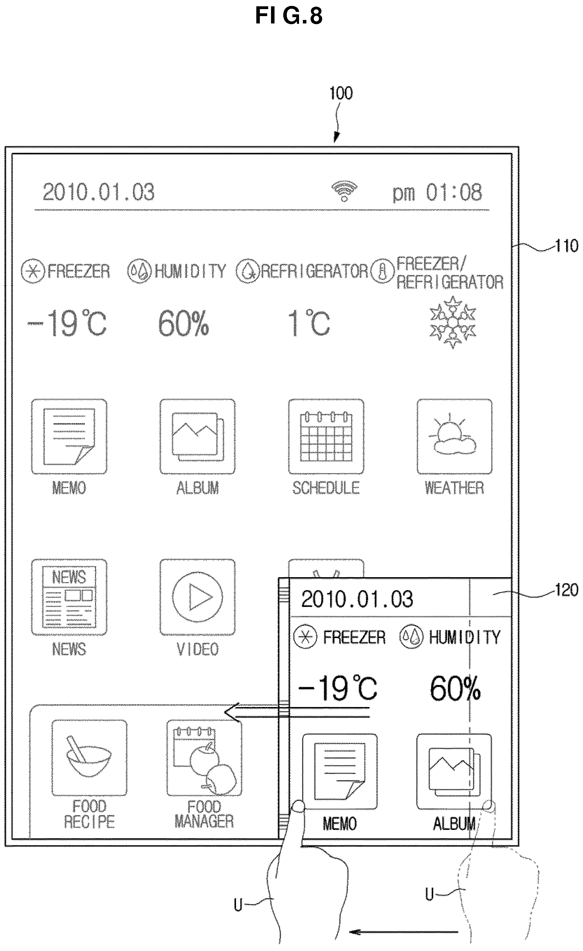

FIGS. 8, 9A, 9B, 9C, 9D, 10, 11, 12, 13, and 14 illustrate an example of a screen displayed on the user interface in accordance with the controlling method illustrated in FIG. 7.

Referring to FIGS. 8, 9A, 9B, 9C, 9D, 10, 11, 12, 13, and 14, an example of the electronic device 1 displaying the hidden menu of the user interface 100 will be described.

For example, when the user U is unable to touch the launcher icons 111a to 111h disposed in the first area 111 of the home screen 110, the user U may touch a right edge portion of the home screen 110 and move the touch point to the left as illustrated in FIG. 8.

When the user U moves the touch point leftward from the right edge portion of the home screen 110, a first hidden menu 120 is generated on the right edge portion of the home screen 110, and the first hidden menu 120 may move leftward along with the movement of the touch point of the user U.

Specifically, the main controller 10 generates image data of the first hidden menu 120 moving along with the movement of the touch point of the user U and transmits the generated image data to the user interface 100. The user interface 100 that has received the image data displays an image of the first hidden menu 120 moving on the display panel 101.

For example, an image of the first hidden menu 120 moving leftward may be displayed on the user interface 100 as illustrated in FIG. 8.

When the user U moves the touch point leftward a reference distance or more, the first hidden menu 120 may move up to a left edge portion of the home screen 110, the movement of the first hidden menu 120 may be stopped when the first hidden menu 120 reaches the left edge portion of the home screen 110, and the first hidden menu 120 may be displayed in the lower portion of the home screen 110.

Specifically, when the distance in which the touch point has moved leftward is equal to or longer than the reference distance, the main controller 10 generates image data of the first hidden menu 120 displayed in the lower portion of the home screen 110 and transmits the generated image data to the user interface 100. The user interface 100 that has received the image data may display the first hidden menu 120 on the display panel 101.

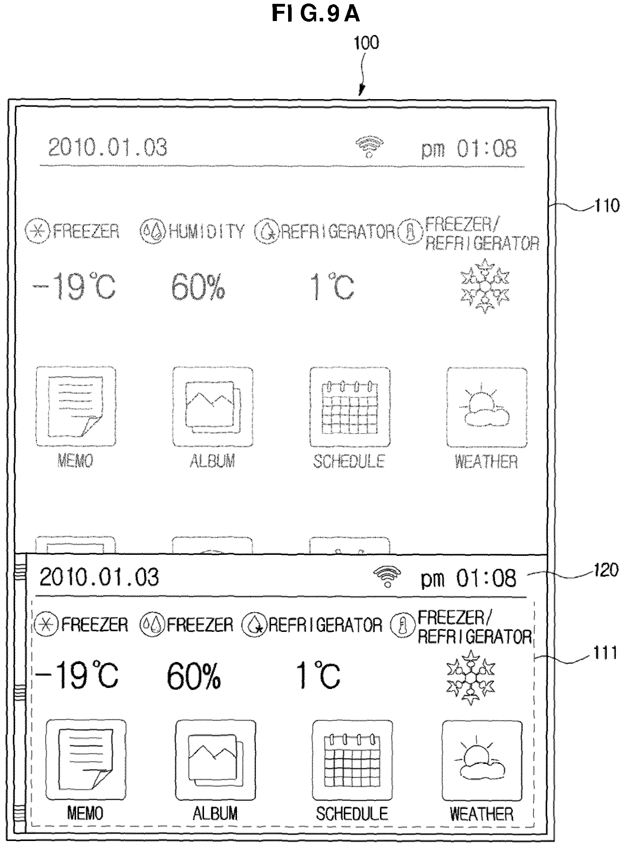

For example, the first hidden menu 120 may be displayed in the lower portion of the user interface 100 as illustrated in FIG. 9A.

The first hidden menu 120 may include image objects disposed in the upper portion of the user interface 100. For example, the first hidden menu 120 may include the launcher icons 111a to 111h h disposed in the first area 111 of the home screen 110 as illustrated in FIG. 9A.

As a result, the user U may use the launcher icons disposed in the first area 111 of the home screen 110 using the first hidden menu 120.

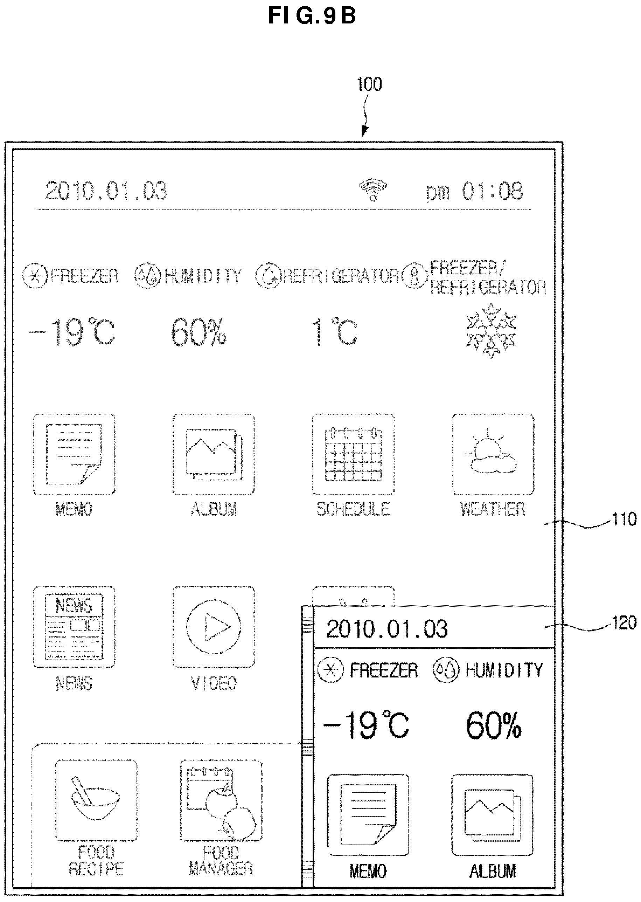

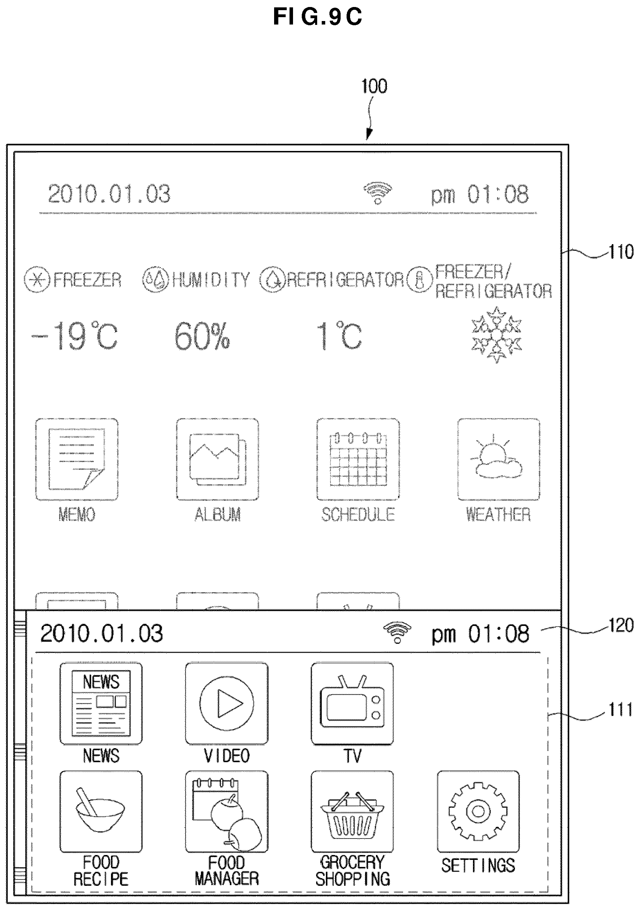

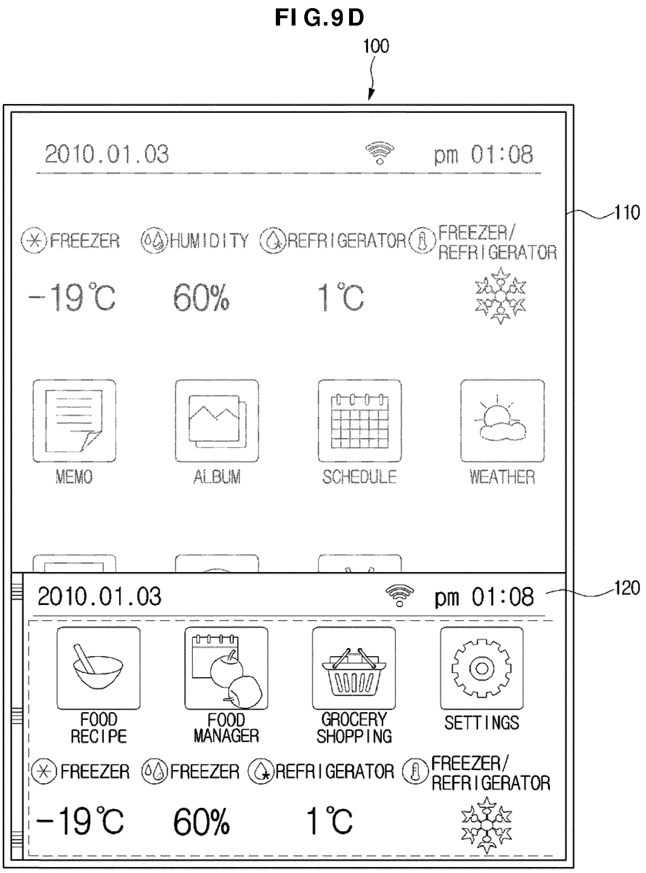

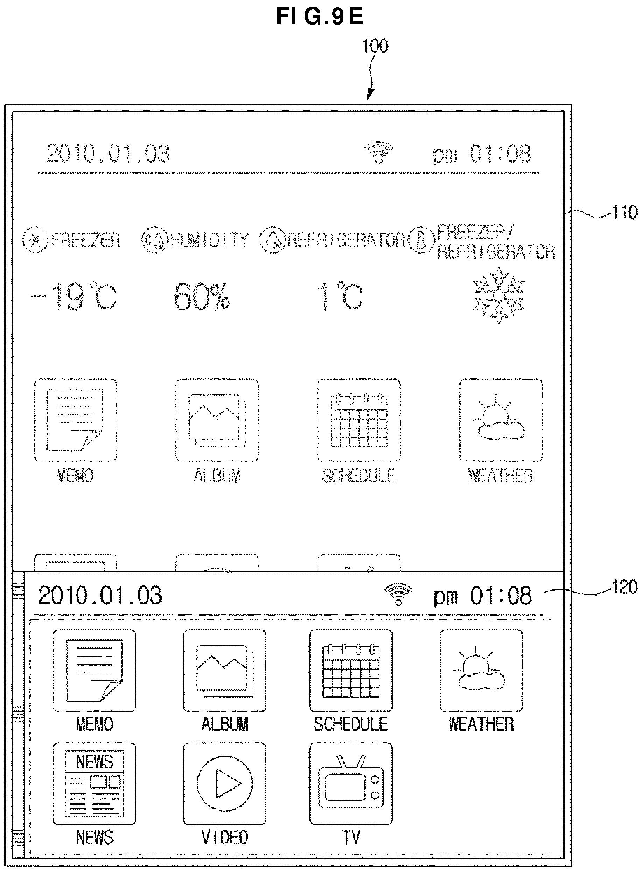

In addition, the touch input may be deactivated in areas of the home screen 110 besides the area in which the first hidden menu 120 is displayed. For example, as illustrated in FIG. 9, the electronic device 1 may darken the areas of the home screen 110 besides the first hidden menu 120 and may ignore touch inputs received via areas besides the first hidden menu 120.

Although it has been described above that the first hidden menu 120 is generated at the right edge and moves to the left edge in accordance with the touch input of the user U, embodiments are not limited thereto.

For example, the first hidden menu 120 may move up to a position at which the touch input of the user U has ended. Specifically, when the user U touches the right edge and moves the touch point leftward, the first hidden menu 120 may move leftward from the right edge along with the movement of the touch point of the user U. Here, when the user U ends the touching while moving the touch point leftward, the first hidden menu 120 may move up to a position corresponding to the point at which the touch has ended and stop moving.

As a result, the first hidden menu 120 may be displayed in one part of the lower portion of the user interface 100 as illustrated in FIG. 9B.

In addition, although it has been described above that the first hidden menu 120 includes the launcher icons 111 a to 111 h included in the first area 111, embodiments are not limited thereto.

For example, the first hidden menu 120 may include all of the launcher icons 111a to 111 h, 112a to 112c, and 112e to 112h included in the home screen 110. In this case, the launcher icons 111a to 111 h, 112a to 112c, and 112e to 112h displayed on the first hidden menu 120 may change in accordance with the movement of the touch point of the user U.

For example, when the user U touches the first hidden menu 120 illustrated in FIG. 9A and moves the touch point downward, the launcher icons displayed on the first hidden menu 120 may move downward, and the launcher icons 112a to 112c and 112e to 112h disposed in the second area 112 may be displayed on the first hidden menu 120 as illustrated in FIG. 9C. Also, when the user U touches the first hidden menu 120 illustrated in FIG. 9A and moves the touch point upward, the launcher icons displayed on the first hidden menu 120 may move upward, and the launcher icons 112a to 112c and 112e to 112h disposed in the second area 112 may be displayed on the first hidden menu 120.

In addition, the launcher icons may be displayed in order in accordance with the movement of the touch point of the user U. Specifically, when the user U touches the first hidden menu 120 illustrated in FIG. 9A and moves the touch point downward, the launcher icons displayed on the first hidden menu 120 may move downward. As a result, as illustrated in FIG. 9D, the launcher icons 111a to 111d disposed in the upper portion among the launcher icons included in the first area 111 may be displayed in the lower portion of the first hidden menu 120, and the launcher icons 112e to 112h disposed in the lower portion among the launcher icons included in the second area 112 may be displayed in the upper portion of the first hidden menu 120.

In addition, when the user U touches the first hidden menu 120 illustrated in FIG. 9A and moves the touch point downward, the launcher icons displayed on the first hidden menu 120 may move upward. As a result, as illustrated in FIG. 9E, the launcher icons 111e to 111h h disposed in the lower portion among the launcher icons included in the first area 111 may be displayed in the lower portion of the first hidden menu 120, and the launcher icons 112a to 112c disposed in the upper portion among the launcher icons included in the second area 112 may be displayed in the upper portion of the first hidden menu 120.

Next, when the user U wants to remove the first hidden menu 120, the user U may touch the left edge portion of the first hidden menu 120 and move the touch point rightward. When the user U moves the touch point rightward, the first hidden menu 120 may be moved rightward along with the movement of the touch point of the user U.

Specifically, the main controller 10 generates image data of the first hidden menu 120 moving along with the movement of the touch point of the user U and transmits the generated image data to the user interface 100. The user interface 100 that has received the image data may display an image of the first hidden menu 120 moving on the display panel 101.

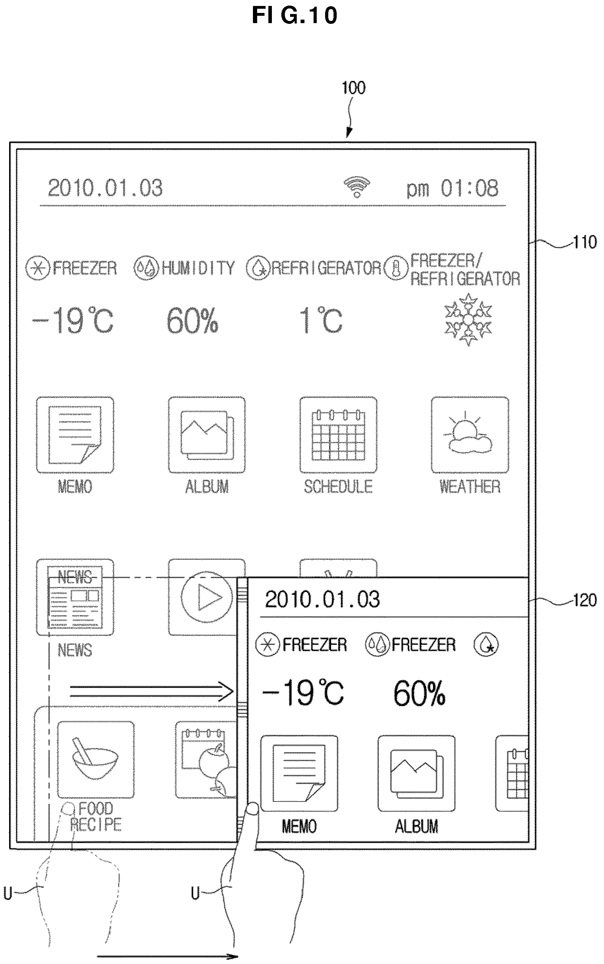

For example, an image of the first hidden menu 120 moving rightward from the left may be displayed on the user interface 100 as illustrated in FIG. 10.

When the user moves the touch point rightward a reference distance or more, the first hidden menu 120 moves up to the right edge portion of the home screen 110, and the first hidden menu 120 disappears when it reaches the right edge portion of the home screen 110.

Specifically, when the distance in which the touch point has moved rightward is equal to or longer than the reference distance, the main controller 10 generates image data of the home screen 110 in which the first hidden menu 120 has been removed and transmits the generated image data to the user interface 100. The user interface 100 that has received the image data displays the home screen 110 in which the first hidden menu 120 has been removed on the display panel 101.

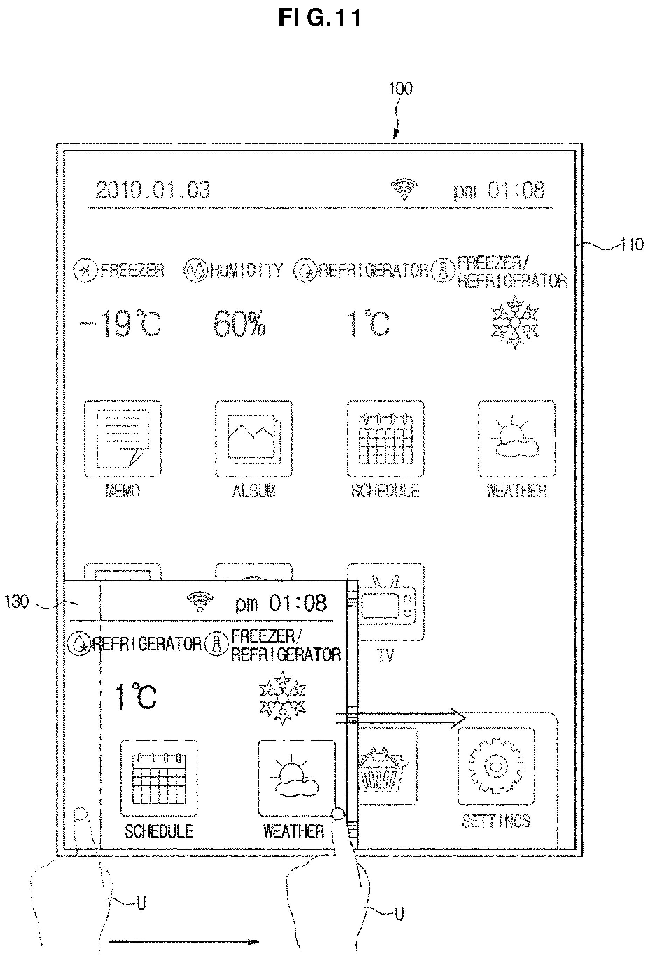

In another example, when the user is unable to touch the launcher icons 111a to 111h disposed in the first area 111 of the home screen 110, the user may touch the left edge portion of the home screen 110 and move the touch point rightward as illustrated in FIG. 11.

When the user U moves the touch point rightward from the left edge portion of the home screen 110, a second hidden menu 130 may be generated at the left edge portion of the home screen 110, and the first hidden menu 120 may be moved rightward along with the movement of the touch point of the user U.

Specifically, the main controller 10 generates image data of the second hidden menu 130 moving along with the touch point of the user and transmits the generated image data to the user interface 100. In accordance with the received image data, the user interface 100 displays the image of the second hidden menu 130 moving rightward on the display panel 101.

As a result, the image of the second hidden menu 130 moving rightward from the left may be displayed on the user interface 100 as illustrated in FIG. 11.

When the user moves the touch point rightward a reference distance or more, the second hidden menu 130 may move up to the right edge portion of the home screen 110, and the second hidden menu 130 may be displayed in the lower portion of the home screen 110 when the second hidden menu 130 reaches the right edge portion of the home screen 110.

Specifically, when the distance in which the touch point has moved rightward is equal to or longer than the reference distance, the main controller 10 generates image data of the second hidden menu 130 displayed in the lower portion of the home screen 110 and transmits the generated image data to the user interface 100. The user interface 100 that has received the image data may display the second hidden menu 130 on the display panel 101.

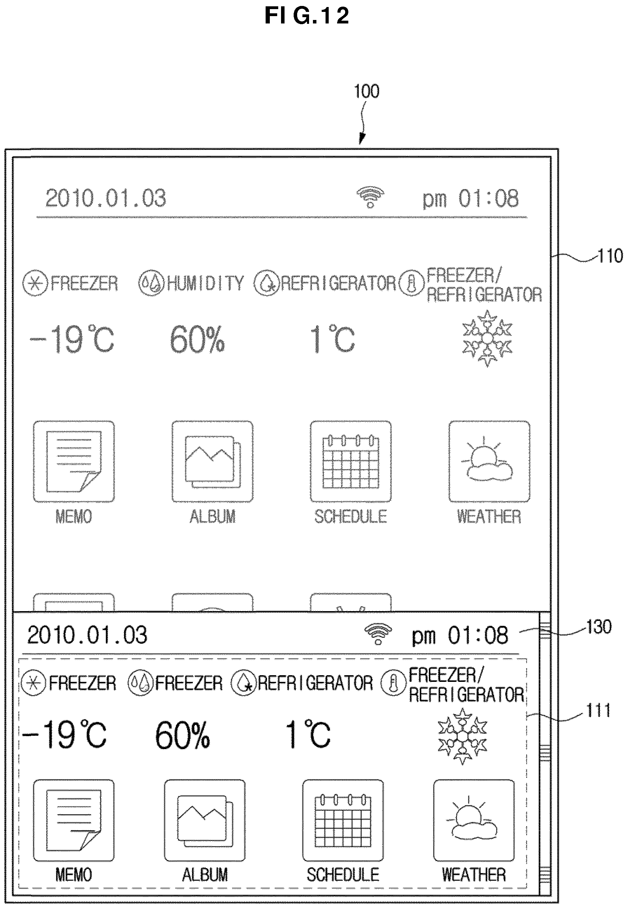

As a result, the second hidden menu 130 may be displayed in the lower portion of the user interface 100 as illustrated in FIG. 12.

The second hidden menu 130 may include image objects disposed in the upper portion of the user interface 100. For example, the second hidden menu 130 may include the launcher icons 111a to 111h disposed in the first area 111 of the home screen 110 as illustrated in FIG. 12.

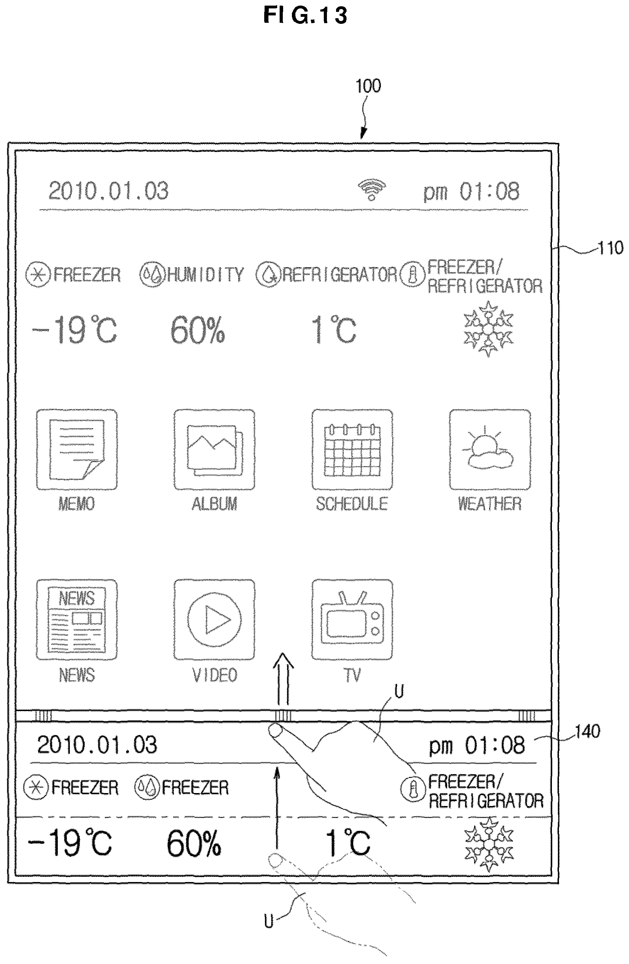

In still another example, when the user is unable to touch the launcher icons 111a to 111h disposed in the first area 111 of the home screen 110, the user may touch a lower edge portion of the user interface 100 and move the touch point upward as illustrated in FIG. 13.

When the user U moves the touch point upward from the lower edge portion of the home screen 110, a third hidden menu 140 is generated at the lower portion of the home screen 110, and the third hidden menu 140 may move upward along with the movement of the touch point of the user U.

Specifically, the main controller 10 generates image data of the third hidden menu 140 moving upward along with the touch point of the user and transmits the generated image data to the user interface 100. In accordance with the received image data, the user interface 100 displays the image of the third hidden menu 140 moving upward on the display panel 101.

As a result, the image of the third hidden menu 140 moving upward from the lower portion may be displayed on the user interface 100 as illustrated in FIG. 13.

When the user moves the touch point upward a reference distance or more, the third hidden menu 140 may move up to a middle portion of the home screen 110, the third hidden menu 140 may stop moving when it reaches the middle portion of the home screen 110, and the third hidden menu 140 may be displayed in the lower portion of the home screen 110.

Specifically, the main controller 10 generates image data of the third hidden menu 140 and transmits the generated image data to the user interface 100. The user interface 100 that has received the image data may display the third hidden menu 140 on the display panel 101.

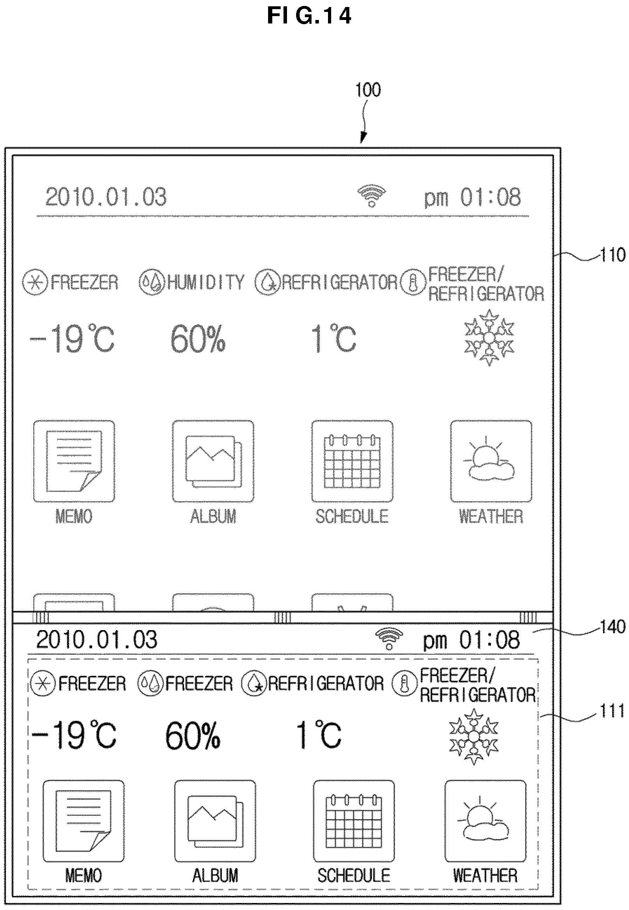

As a result, the third hidden menu 140 may be displayed on the lower portion of the user interface 100 as illustrated in FIG. 14.

The image objects disposed in the upper portion of the user interface 100 may be displayed on the third menu 140. For example, the third hidden menu 140 may include the launcher icons 111a to 111h disposed in the first area 111 of the home screen 110 as illustrated in FIG. 14.

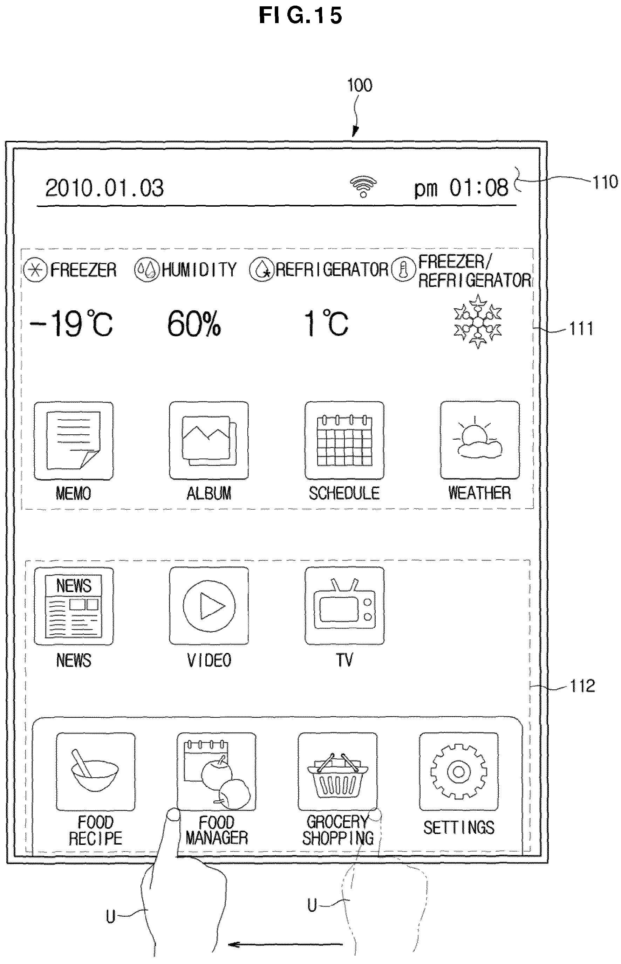

FIGS. 15, 16, 17, and 18 illustrate another example of a screen displayed on the user interface in accordance with the controlling method illustrated in FIG. 7.

Referring to FIGS. 15, 16, 17, and 18, an example of the electronic device 1 displaying a hidden menu of the user interface 100 will be described.

For example, when the user U is unable to touch the launcher icons 111 a to 111 h disposed in the first area 111 of the home screen 110, the user U may touch a random position on the home screen 110 and move the touch point leftward as illustrated in FIG. 15. Also, the user U may end the user touch while moving the touch point (hereinafter, such motion will be referred to as "sliding motion").

When a leftward sliding motion is detected on the user interface 100, the main controller 10 generates image data of the first hidden menu 120 moving leftward and transmits the generated image data to the user interface 100. In accordance with the received image data, the user interface 100 displays the image of the first hidden menu 120 moving leftward on the display panel 101.

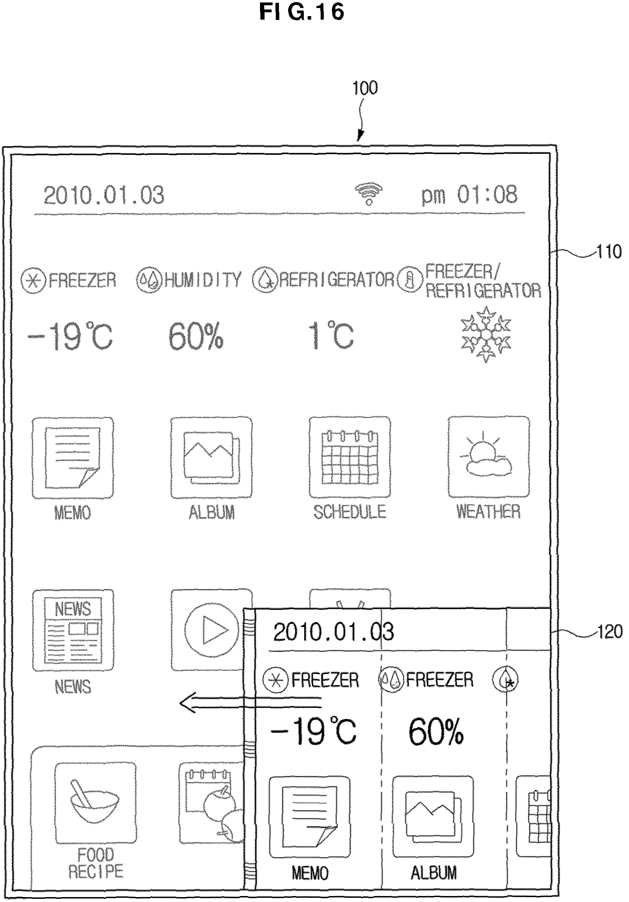

As a result, the image of the first hidden menu 120 moving leftward from the right may be displayed on the user interface 100 as illustrated in FIG. 16.

In addition, when the first hidden menu 120 moving leftward reaches the left edge portion of the home screen 110, the movement of the first hidden menu 120 may be stopped and the first hidden menu 120 may be displayed in the lower portion of the home screen 110.

Specifically, when the first hidden menu 120 reaches the left edge portion of the home screen 110, the main controller 10 generates image data of the first hidden menu 120 displayed in the lower portion of the home screen 110 and transmits the generated image data to the user interface 100. The user interface 100 that has received the image data may display the home screen 110 including the first hidden menu 120 on the display panel 101.

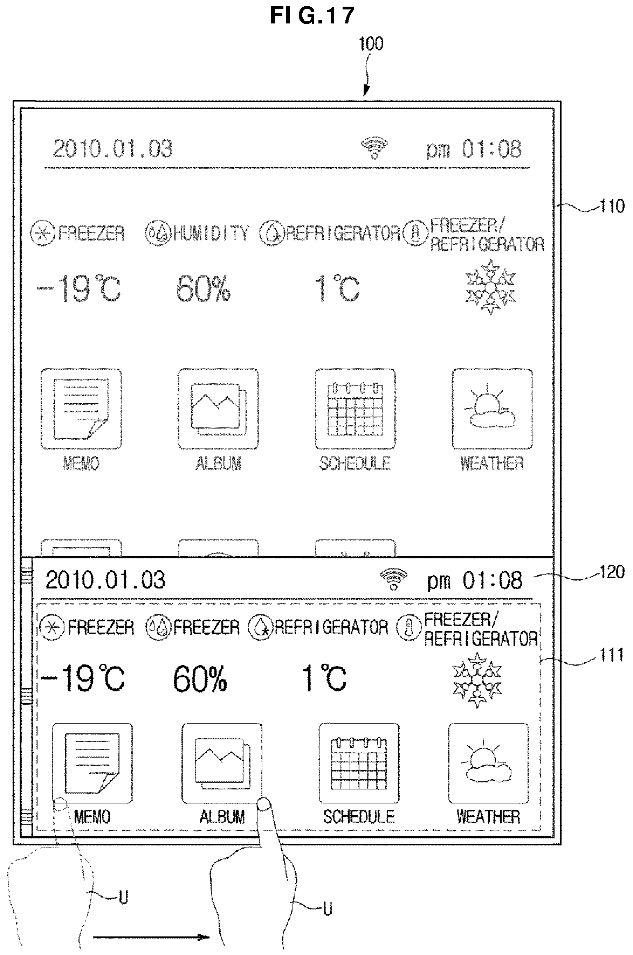

When attempting to remove the first hidden menu 120, the user U may touch a random position on the first hidden menu 120 and move the touch point rightward as illustrated in FIG. 17. Also, the user U may end the touching while moving the touch point (hereinafter, such motion will be referred to as "sliding motion").

When a rightward sliding motion is detected within the first hidden menu 120, the main controller 10 generates image data of the first hidden menu 120 moving rightward and transmits the generated image data to the user interface 100. In accordance with the received image data, the user interface 100 displays the image of the first hidden menu 120 moving rightward on the display panel 101.

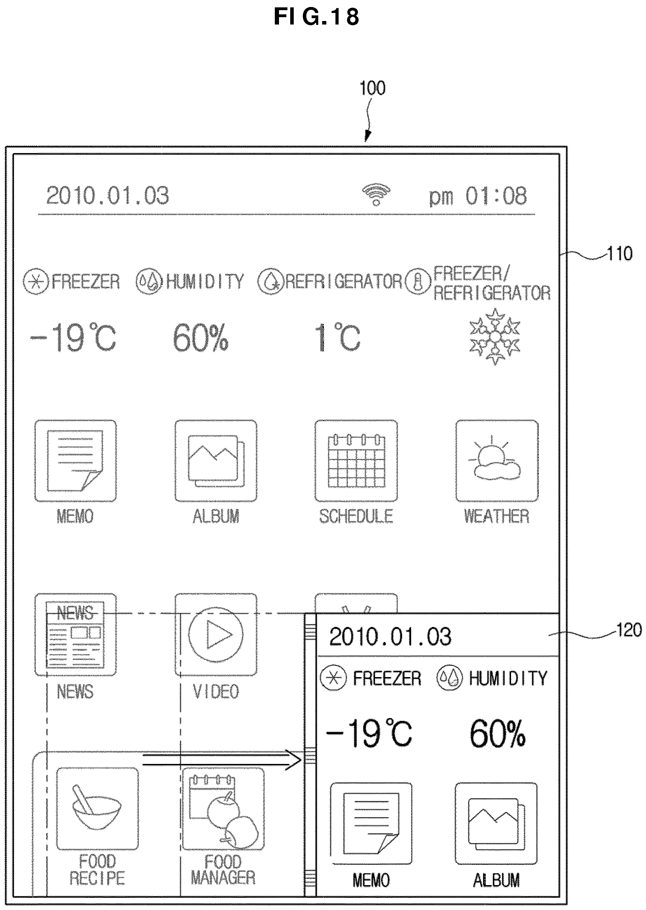

As a result, the image of the first hidden menu 120 moving rightward from the left may be displayed on the user interface 100 as illustrated in FIG. 18.

In addition, when the first hidden menu 120 moving rightward reaches the right edge portion of the home screen 110, the first hidden menu 120 disappears.

Specifically, when the first hidden menu 120 reaches the right edge portion of the home screen 110, the main controller 10 generates image data of the home screen 110 in which the first hidden menu 120 has been removed and transmits the generated image data to the user interface 100. The user interface 100 that has received the image data may display the home screen 110 in which the first hidden menu 120 has been removed on the display panel 101.

Furthermore, the user U may touch a random position on the home screen 110, move the touch point rightward or upward, and end the touching while moving the touch point. As a result, a hidden menu may be displayed on the user interface 100.

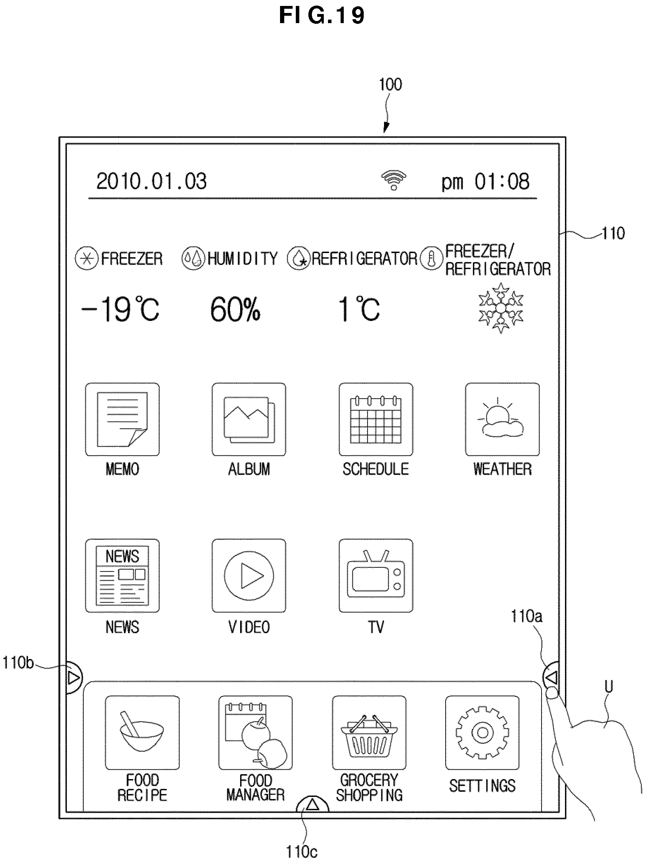

FIGS. 19, 20, 21, and 22 illustrate still another example of a screen displayed on the user interface in accordance with the controlling method illustrated in FIG. 7.

Referring to FIGS. 19, 20, 21, and 22, still another example of the electronic device 1 displaying a hidden menu of the user interface 100 will be described.

For example, when the user U is unable to touch the launcher icons 111 a to 111 h disposed in the first area 111 of the home screen 110, the user U may touch hidden menu display icons 110a, 110b, and 110c provided on the home screen 110 of the user interface 100.

At least one of the hidden menu display icons 110a, 110b, and 110c for displaying the hidden menus 120, 130, and 140 may be provided on the home screen 110. For example, as illustrated in FIG. 19, a first hidden menu display icon 110a for displaying the first hidden menu 120 may be provided at the right portion of the home screen 110, and a second hidden menu display icon 110b for displaying the second hidden menu 130 may be provided at the left portion of the home screen 110. Also, a third hidden menu display icon 110c for displaying the third hidden menu 140 may be provided at the lower portion of the home screen 110.

When the user U touches the first hidden menu display icon 110a as illustrated in FIG. 19, the first hidden menu 120 may be displayed on the user interface 100.

Specifically, the main controller 10 generates image data of the first hidden menu 120 moving leftward and transmits the generated image data to the user interface 100. In accordance with the received image data, the user interface 100 displays the image of the first hidden menu 120 moving leftward on the display panel 101.

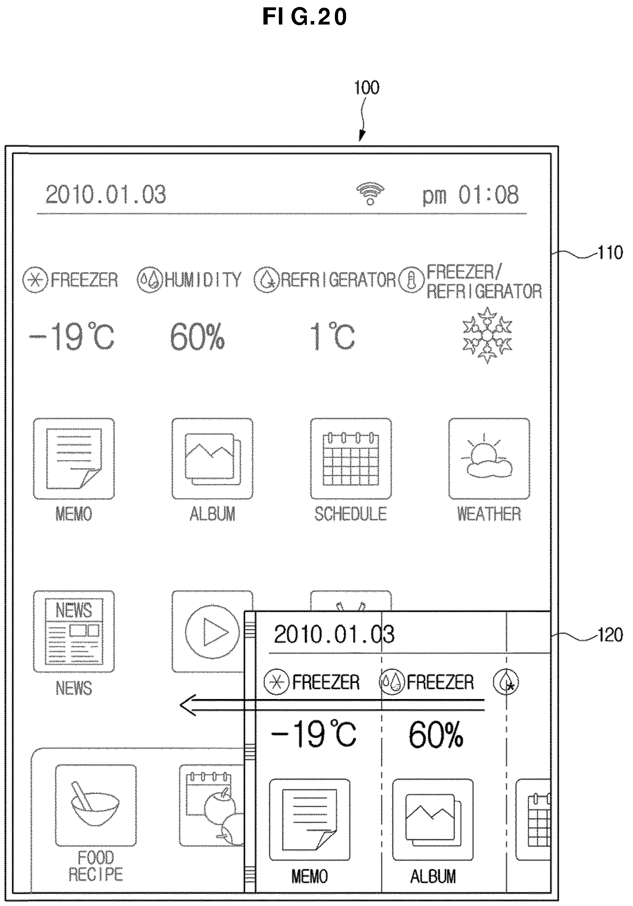

As a result, the image of the first hidden menu 120 moving leftward from the right may be displayed on the user interface 100 as illustrated in FIG. 20.

In addition, when the first hidden menu 120 moving leftward reaches the left edge portion of the home screen 110, the movement of the first hidden menu 120 may be stopped, and the first hidden menu 120 may be displayed in the lower portion of the user interface 100.

Specifically, when the first hidden menu 120 reaches the left edge portion of the home screen 110, the main controller 10 generates image data of the home screen 110 including the first hidden menu 120 and transmits the generated image data to the user interface 100. The user interface 100 that has received the image data may display the home screen 110 including the first hidden menu 120 on the display panel 101.

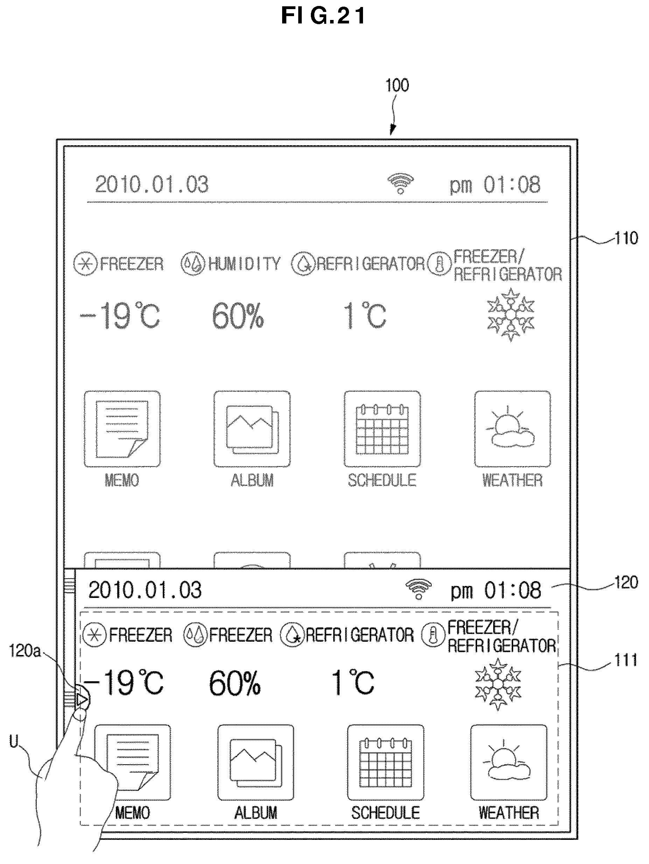

As a result, the first hidden menu 120 may be displayed in the lower portion of the user interface 100 as illustrated in FIG. 21. The first hidden menu 120 may include a first hidden menu removal icon 120a for removing the first hidden menu 120.

When the user touches the first hidden menu removal icon 120a, the first hidden menu 120 is removed from the home screen 110 of the user interface 100.

Specifically, the main controller 10 may generate image data of the first hidden menu 120 moving rightward and transmit the generated image data to the user interface 100. Also, the user interface 100 may display the image of the first hidden menu 120 moving rightward in accordance with the received image data.

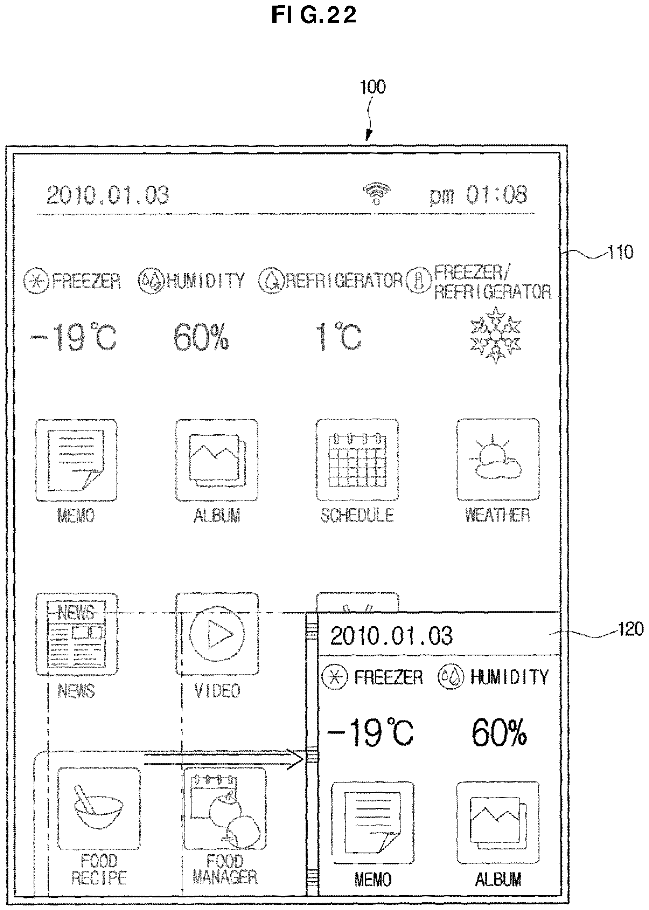

As a result, the image of the first hidden menu 120 moving rightward from the left may be displayed on the user interface 100 as illustrated in FIG. 22.

When the first hidden menu 120 reaches the right edge portion of the home screen 110, the first hidden menu 120 disappears from the home screen 110.

When the first hidden menu 120 reaches the left edge portion of the home screen 110, the main controller 10 generates image data of the home screen 110 in which the first hidden menu 120 has been removed and transmits the generated image data to the user interface 100. The user interface 100 that has received the image data displays the home screen 110 in which the first hidden menu 120 has been removed.

Furthermore, the user U may touch the second hidden menu display icon 110b provided at the left edge portion of the user interface 100 or the third hidden menu display icon 110c provided at the lower edge portion of the user interface 100. As a result, a hidden menu may be displayed on the user interface 100.

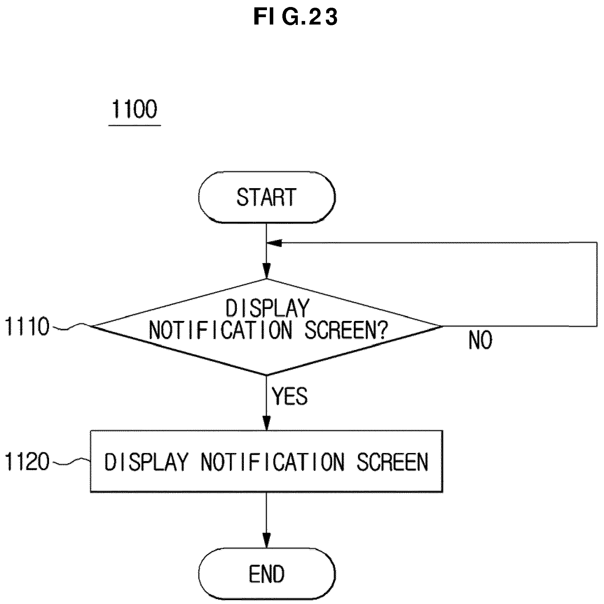

FIG. 23 illustrates another example of a method of displaying the user interface of the electronic device according to the embodiment.

Referring to FIG. 23, a displaying method 1100 of the user interface 100 of the electronic device 1 will be described.

The electronic device 1 determines whether to display a notification screen of the user interface 100 while being operated (S1110). When a notification screen display command for displaying a notification screen is input, the main controller 10 of the electronic device 1 may display a notification screen on the user interface 100.

When attempting to deliver a message to the user U, the electronic device 1 may deliver a message to the user U via a notification screen. For example, when an abnormality has occurred in the electronic device 1 or there is an important schedule input by the user U, the electronic device 1 may deliver a message to the user U via the notification screen.

In addition, as described above, the user interface 100 may include the large display panel 101 and the touch panel 102. In this manner, when the user interface 100 includes the large display panel 101 and the touch panel 102, the user may face inconvenience in using the launcher icons disposed in the upper portion of the user interface 100. To remove the inconvenience, the electronic device 1 may display some of the launcher icons of the user interface 100 on the notification screen. Here, the notification screen may include the launcher icons disposed in the upper portion of the user interface 100 or include launcher icons recently used by the user.

The notification screen will be described in more detail in an example to be described below.

In addition, the user U may input the notification screen display command using various methods. For example, to input the notification screen display command, the user U may touch the user interface 100 and move the touch point or touch a launcher icon for displaying the notification screen. Also, the user U may quickly touch the user interface 100 twice or more, or touch the user interface 100 and keep touching the user interface 100 for a long time.

When not displaying the notification screen (NO to S1110), the electronic device 1 continues to perform an operation that was previously being performed.

In addition, when displaying the notification screen (YES to S1110), the electronic device 1 displays the notification screen on the screen of the user interface 100 (S1120).

As described above, the electronic device 1 may deliver a message to the user U via the notification screen.

The notification screen may include launcher icons disposed at positions unreachable by the hand of the user U or include launcher icons recently used by the user U. Also, the notification screen may be disposed at a position reachable by the hand of the user U.

By the notification screen being displayed as described above, the user U may touch the launcher icons disposed at positions unreachable by hand and may use applications executed by the corresponding launcher icons.

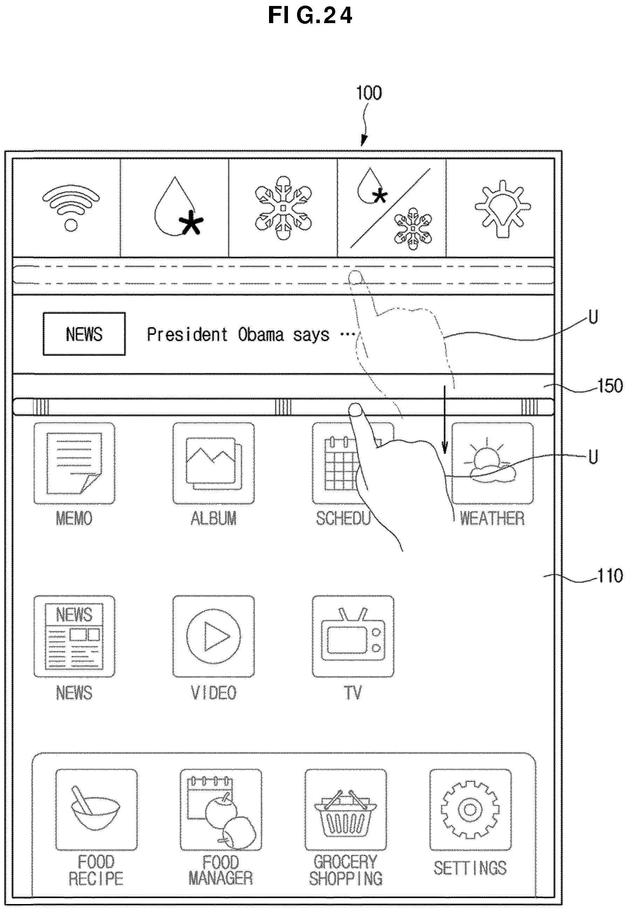

FIGS. 24, 25, 26, and 27 illustrate an example of a screen displayed on the user interface in accordance with the controlling method illustrated in FIG. 23.

Referring to FIGS. 24, 25, 26, and 27, an example of the electronic device 1 displaying a notification screen of the user interface 100 will be described.

For example, when attempting to check a message of the electronic device 1, the user U may touch an upper edge portion of the home screen 110 of the user interface 100 and move the touch point downward as illustrated in FIG. 24.

When the user U moves the touch point downward from the upper edge portion of the home screen 110, a first notification screen 150 is generated at the upper portion of the home screen 110, and the first notification screen 150 may be moved downward along with the movement of the touch point of the user U.

Specifically, the main controller 10 generates image data of the first notification screen 150 moving along with the movement of coordinates of the touch point of the user U and transmits the generated image data to the user interface 100. The user interface 100 that has received the image data displays the image of the first notification screen 150 moving downward on the display panel 101.

As a result, the image of the first notification screen 150 moving downward from the upper portion of the home screen 110 may be displayed on the user interface 100 as illustrated in FIG. 24.

When the user U moves the touch point downward a reference distance or more, the first notification screen 150 may move up to a lower end portion of the home screen 110, the movement of the first notification screen 150 may be stopped when it reaches the lower edge portion of the home screen 110, and the first notification screen 150 may be displayed on the user interface 100.

Specifically, when the distance in which the touch point has moved downward is equal to or longer than the reference distance, the main controller 10 generates image data of the first notification screen 150 and transmits the generated image data to the user interface 100. The user interface 100 that has received the image data may display the first notification screen 150 on the display panel 101.

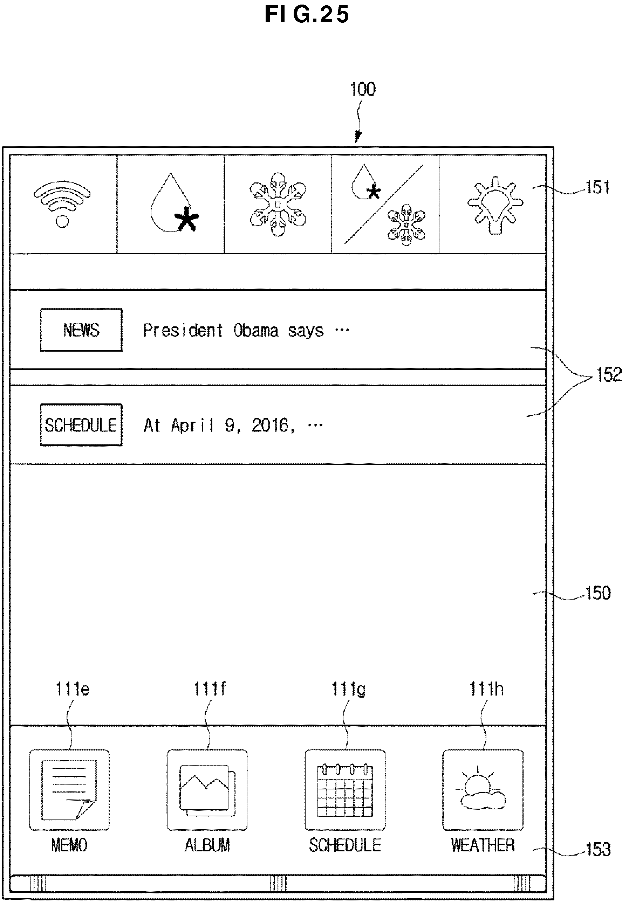

As a result, the first notification screen 150 may be displayed on the user interface 100 as illustrated in FIG. 25.

The first notification screen 150 may include a settings area 151 for inputting set values related to functions of the electronic device 1, a message display area 152 for displaying a message of the electronic device 1, and an icon display area 153 for displaying the launcher icons disposed in the upper portion of the home screen 110. Particularly, the icon display area 153 may be provided in a lower portion of the first notification screen 150 and display the launcher icons 111 e to 111 h disposed in the first area 111 of the home screen 110 as illustrated in FIG. 25. Furthermore, the icon display area 153 may also display launcher icons recently used by the user.

As a result, the user U may use the launcher icons 111 e to 111 h disposed in the first area 111 of the home screen 110 using the icon display area 153 of the first notification screen 150. Also, the user U may use recently-used launcher icons via the first notification screen 150.

When attempting to remove the first notification screen 150, the user U may touch a lower edge portion of the first notification screen 150 and move the touch point upward. When the user U moves the touch point upward, the first notification screen 150 moves upward along with the movement of the touch point of the user U and disappears.

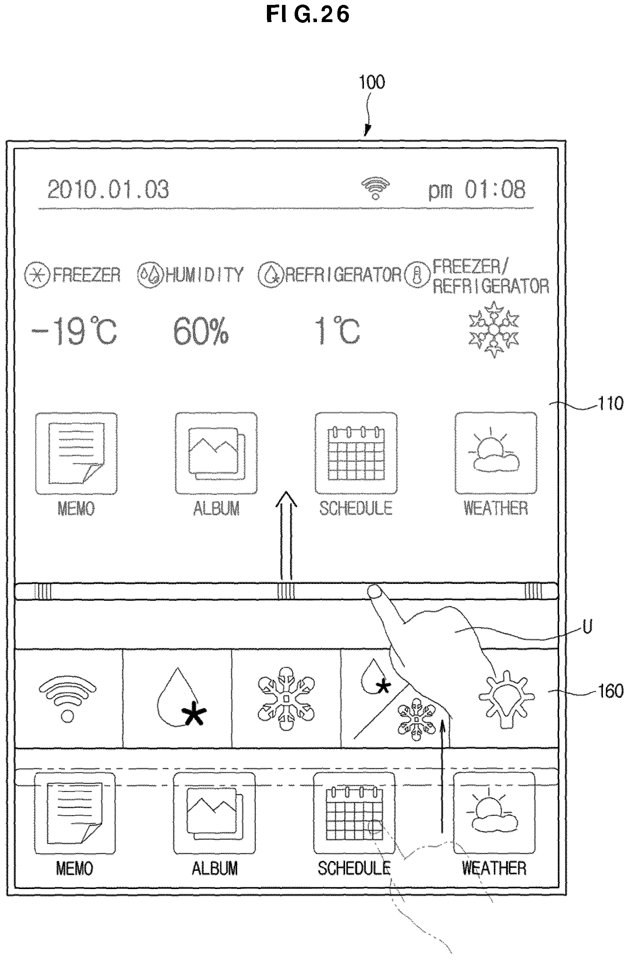

In another example, when attempting to check a message of the electronic device 1, the user U may touch the lower edge portion of the home screen 110 of the user interface 100 and move the touch point upward as illustrated in FIG. 26.

When the user U moves the touch point upward from the lower edge portion of the home screen 110, a second notification screen 160 may be generated in the upper portion of the home screen 110 and the first notification screen 150 may move downward along with the movement of the touch point of the user U.

Specifically, the main controller 10 generates image data of the second notification screen 160 moving along with the movement of coordinates of the touch point of the user U and transmits the generated image data to the user interface 100. The user interface 100 that has received the image data displays the image of the second notification screen 160 moving upward on the display panel 101.

As a result, the image of the second notification screen 160 moving upward from the lower portion of the home screen 110 may be displayed on the user interface 100 as illustrated in FIG. 26.

When the user U moves the touch point upward a reference distance or more, the second notification screen 160 may move up to the lower edge portion of the home screen 110, the movement of the second notification screen 160 may be stopped when it reaches the upper edge portion of the home screen 110, and the second notification screen 160 may be displayed on the user interface 100.

Specifically, when the distance in which the touch point has moved upward is equal to or longer than the reference distance, the main controller 10 generates image data of the second notification screen 160 and transmits the generated image data to the user interface 100. The user interface 100 that has received the image data may display the second notification screen 160 on the display panel 101.

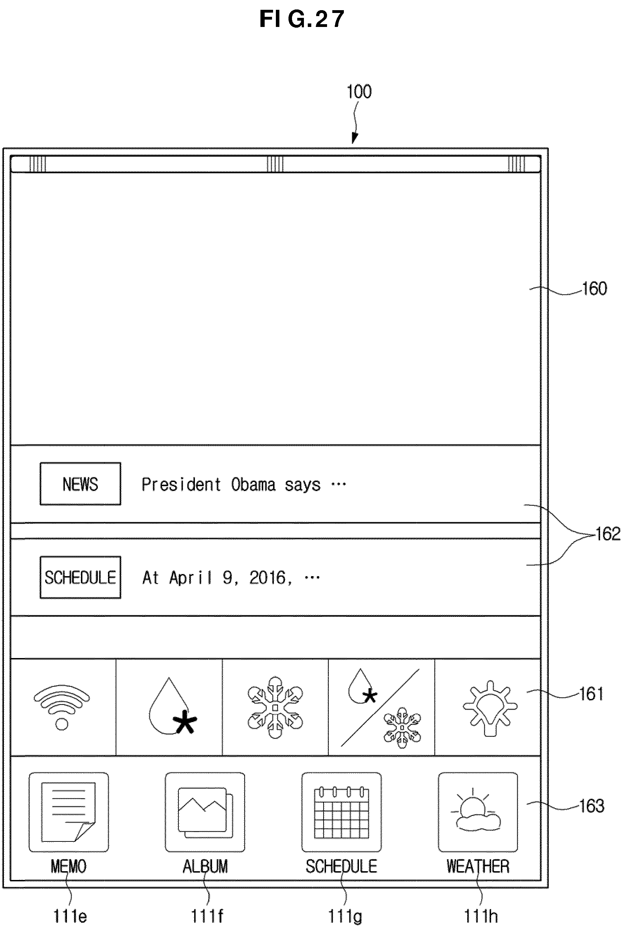

As a result, the second notification screen 160 may be displayed on the user interface 100 as illustrated in FIG. 27.

The second notification screen 160 may include a settings area 161 for inputting set values related to functions of the electronic device 1, a message display area 162 for displaying a message of the electronic device 1, and an icon display area 163 for displaying the launcher icons disposed in the upper portion of the home screen 110. Particularly, the icon display area 163 may be provided at a lower portion of the second notification screen 160 and display the launcher icons 111 e to 111h h disposed in the first area 111 of the home screen 110 as illustrated in FIG. 27. Furthermore, the icon display area 163 may also display launcher icons recently used by the user.

As a result, the user U may use the launcher icons disposed in the upper portion of the home screen 110 using the icon display area 163 of the second notification screen 160. Also, the user U may use recently-used launcher icons via the second notification screen 160.

When the user U wants to remove the second notification screen 160, the user U may touch an upper edge portion of the second notification screen 160 and move the touch point downward. When the user U moves the touch point downward, the second notification screen 160 moves downward along with the movement of the touch point of the user U and disappears.

In the above, the configurations and the operations of the electronic device according to one embodiment have been described.

Hereinafter, configurations and operations of an electronic device according to another embodiment will be described.

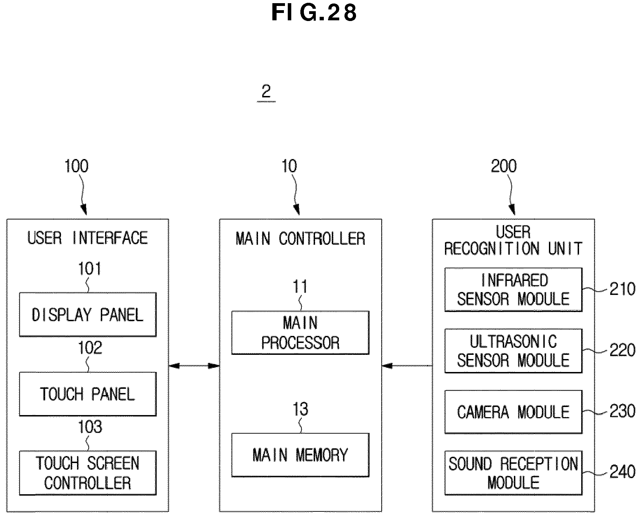

FIG. 28 illustrates a configuration of an electronic device according to another embodiment.

Referring to FIG. 28, an electronic device 2 may include the user interface 100 to interact with a user, the main controller 10 to control an operation of the electronic device 2, and a user recognition unit 200 to distinguish a user. Here, the electronic device 2 may be any device so long as the device can interact with a user via the user interface 100, and the electronic device 2 is not particularly limited.

The user interface 100 may include the display panel 101 to display an image, the touch panel 102 to receive a user's touch input, and the touch screen controller 103 to control the display panel 101 and the touch panel 102.

The display panel 101 may convert electrical image data of the main controller 10 received via the touch screen controller 103 into an optical image that is visible to the user.

The touch panel 102 may receive a user's touch input and transmit an electrical signal corresponding to the received touch input to the touch screen controller 103.

Specifically, the touch panel 102 detects a user's touch on the touch panel 102 and transmits an electrical signal corresponding to coordinates of the user's touch point to the touch screen controller 103. Although it will be described below, the touch screen controller 103 may acquire the coordinates of the user's contact based on the electrical signal received from the touch panel 102.

In addition, the touch panel 102 may be disposed on the upper surface of the display panel 101. In other words, the touch panel 102 is disposed on a surface on which an image is displayed. Consequently, the touch panel 102 may be formed with a transparent material to prevent distortion of an image displayed on the display panel 101.

The touch screen controller 103 may control operations of the display panel 101 and the touch panel 102. Specifically, the touch screen controller 103 may control the display panel 101 such that an optical image corresponding to image data received from the main controller 10 is displayed and control the touch panel 102 to detect coordinates of the user's touch point.

Particularly, the touch screen controller 103 may determine the coordinates of the user's touch point based on the electrical signal output by the touch panel 102 and transmit the coordinates of the user's touch point to the main controller 10.

The touch screen controller 103 may include a memory (not shown) to store a program and data for controlling the operations of the display panel 101 and the touch panel 102 and a processor (not shown) to execute operations for controlling the operation of the touch panel 102 in accordance with the program and the data stored in the memory. Also, the memory and the processor may be provided as separate chips or may be provided as one chip.

As described above, the user interface 100 may receive the user's touch input and display an image corresponding to the user's touch input.

In addition, the user interface 100 may include a large display panel 101 of 30 inches or larger and the touch panel 102. The electronic device 1 may provide various contents to the user by displaying pictures, playing videos, etc. using the large user interface 100.

The user recognition unit 200 may distinguish the user U. For example, the user recognition unit 200 may distinguish the user U as an adult or a child using the voice of the user U or distinguish the user U as an adult or a child using the height of the user U.

The user recognition unit 200 may include an infrared sensor module 210, an ultrasonic sensor module 220, and a camera module 230 to acquire the height of the user U, and a sound reception module 240 to acquire the voice of the user U.

The infrared sensor module 210 may include a plurality of infrared sensors (not shown) to detect infrared rays generated from the user U. Each of the plurality of infrared sensors may be installed at different heights.

The ultrasonic sensor module 220 may include an ultrasonic wave transmitter (not shown) to transmit ultrasonic waves and an ultrasonic wave receiver (not shown) to receive ultrasonic waves. The ultrasonic waves transmitted by the ultrasonic wave transmitter are reflected by the user U and received by the ultrasonic wave receiver. Also, the ultrasonic sensor module 220 may output a time difference between the ultrasonic waves transmitted by the ultrasonic wave transmitter and the ultrasonic waves received by the ultrasonic wave receiver.

The camera module 230 may include a camera (not shown) to acquire an image of the user U. Also, in some cases, the camera module 230 may include a graphic processor (not shown) to preprocess an image acquired by the camera.

The sound reception module 240 may include a microphone (not shown) to acquire a voice of the user U. Also, in some cases, the sound reception module 240 may include a sound processor (not shown) to preprocess a sound acquired by the microphone.

The user recognition unit 200 is not limited to including all of the infrared sensor module 210, the ultrasonic sensor module 220, the camera module 230, and the sound reception module 240 and may include one or more of the infrared sensor module 210, the ultrasonic sensor module 220, the camera module 230, and the sound reception module 240 in accordance with a method of distinguishing the user U.

A method of distinguishing the user U by the user recognition unit 200 will be described in detail below.

The main controller 10 may include the main memory 13 to store a program and data for controlling an operation of the electronic device 2 and the main processor 11 to execute operations for controlling the operation of the electronic device 2 in accordance with the program and the data stored in the memory 13.

For example, the main controller 10 may transmit image data to the user interface 100 for the user interface 100 to display a plurality of image objects corresponding to a plurality of control commands, and determine a user's control command based on the coordinates of the user's touch point received from the user interface 100. Specifically, the main controller 10 may determine an image object of the coordinates of the user's touch point based on coordinates at which the plurality of image objects are displayed and the coordinates of the user's touch point received from the user interface 100 and determine a control command corresponding to the corresponding image object.

In addition, the main controller 10 may distinguish the user U by the output of the user recognition unit 200 and change a screen displayed on the user interface 100 in accordance with the distinguished user U.

In addition, the main memory 13 and the main processor 11 may be provided as separate chips or may be provided as one chip.

As above, the main controller 10 may control and manage the configurations included in the electronic device 2, and the operation of the electronic device 2 to be described below may be construed as being due to the controlling operation of the main controller 10.

In addition to the above, the electronic device 2 may include various configurations depending on functions.

For example, when the electronic device 2 is a refrigerator, the electronic device 2 may further include a temperature sensor (not shown) to detect a temperature of a storage compartment in which food is stored, a humidity sensor (not shown) to detect a humidity level of the storage compartment, a heat exchanger (not shown) and a compressor (not shown) to supply cold air to the storage compartment, etc. Also, the main controller 10 of the electronic device 2 may control an operation of the compressor in accordance with the temperature of the storage compartment detected by the temperature sensor and the humidity level of the storage compartment detected by the humidity sensor.

In addition, when the electronic device 2 is an air conditioner, the electronic device 2 may further include a temperature sensor (not shown) to detect a temperature of a space being air-conditioned, a humidity sensor (not shown) to detect a humidity level of the space being air-conditioned, a heat exchanger (not shown) and a compressor (not shown) to supply cold air or warm air to the space being air-conditioned, etc. Also, the main controller 10 of the electronic device 2 may control an operation of the compressor in accordance with the temperature of the space being air-conditioned detected by the temperature sensor and the humidity level of the space being air-conditioned detected by the humidity sensor.

Yet, hereinafter, it will be assumed that the electronic device 2 is a refrigerator to assist in understanding the present disclosure.

Hereinafter, a method of distinguishing the user U by the electronic device 2 will be described.

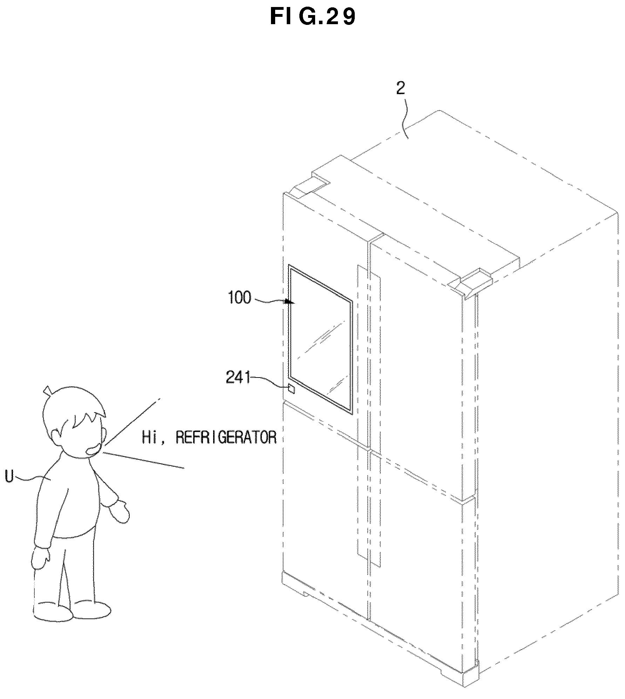

FIG. 29 illustrates an example of distinguishing a user by the electronic device according to another embodiment.

As illustrated in FIG. 29, the electronic device 2 may distinguish the user U using the sound reception module 240.

The sound reception module 240 may include a microphone 241 to receive a voice signal of the user U and to output an electrical signal corresponding to the received voice signal. Here, the microphone 241 may be disposed adjacent to the user interface 100.

The electronic device 2 may preregister voice signals of multiple users and classes of the users. For example, the electronic device 2 may store an adult's voice signal corresponding to an adult and store a child's voice signal corresponding to a child in the main memory 13.

Then, the electronic device 2 may compare a voice signal phonated by the user U with the voice signals stored in the main memory 13 and determine whether the user U who has phonated the voice signal is a child in accordance with the comparison result. Also, the electronic device 2 may change the home screen 110 displayed on the user interface 100 in accordance with whether the user U is an adult or a child.

As described above, the electronic device 2 may determine whether the user U is an adult or a child based on the voice of the user acquired by the sound reception module 240.

In addition, the electronic device 2 may restrict some functions in accordance with the voice signal of the user U. Specifically, the electronic device 2 may compare the voice signal phonated by the user U and the voice signals stored in the main memory 13 and determine that the user U is an unregistered user when the voice signal phonated by the user U does not correspond to any of the voice signals stored in the main memory 13.

When the user U is determined as an unregistered user, the electronic device 2 may restrict executing applications directly related to functions of the electronic device 2. For example, when the electronic device 2 is a refrigerator, the electronic device 2 may deactivate launcher icons that execute temperature/humidity setting applications in order to block executions of the temperature/humidity setting applications that set the temperature and the humidity levels of each storage compartment.

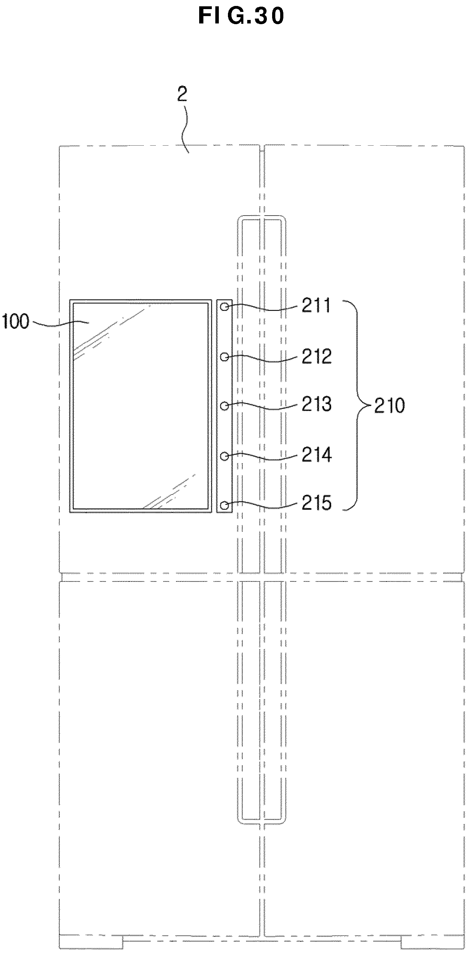

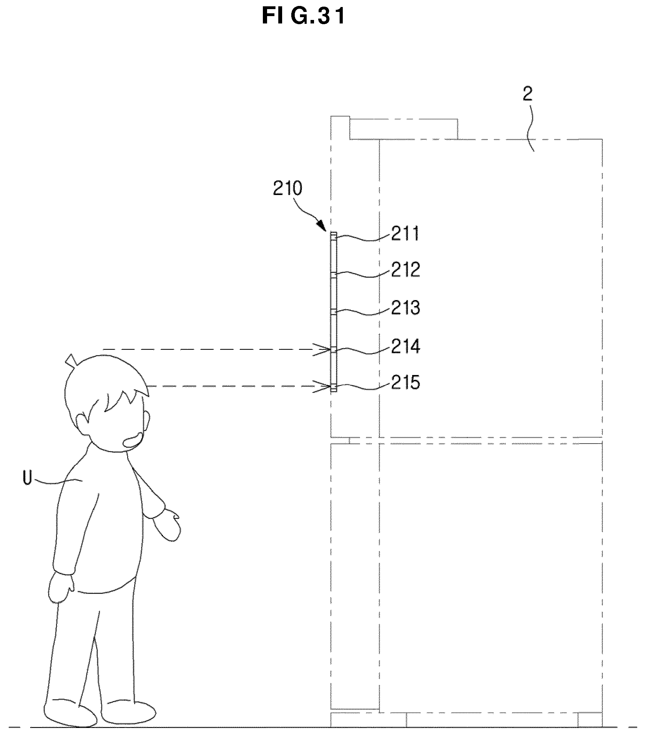

FIGS. 30 and 31 illustrate another example of distinguishing a user by the electronic device according to another embodiment.

As illustrated in FIGS. 30 and 31, the electronic device 2 may distinguish the user U using the infrared sensor module 210.

The infrared sensor module 210 may include a plurality of infrared sensors 211, 212, 213, 214, and 215 to detect infrared rays emitted from the user U. Also, the plurality of infrared sensors 211, 212, 213, 214, and 215 may be installed at different heights. For example, as illustrated in FIG. 30, a first infrared sensor 211, a second infrared sensor 212, a third infrared sensor 213, a fourth infrared sensor 214, and a fifth infrared sensor 215 may be aligned and installed at different heights.

In addition, the electronic device 2 may determine a height H0 of the user U in accordance with positions of the infrared sensors 211, 212, 213, 214, and 215 that have detected infrared rays and determine whether the user U is an adult or a child in accordance with the height of the user U.

For example, when the first infrared sensor 211, the second infrared sensor 212, and the third infrared sensor 213 have failed to detect infrared rays while the fourth infrared sensor 214 and the fifth infrared sensor 215 have detected infrared rays as illustrated in FIG. 31, the electronic device 2 may determine that the user U is a child based on the height at which the fourth infrared sensor 214 is installed.

Also, when all of the infrared sensors 211, 212, 213, 214, and 215 have detected infrared rays, the electronic device 2 may determine that the user U is an adult.

As described above, the electronic device 2 may determine the height H0 of the user U using the infrared sensor module 210 and determine whether the user U is an adult or a child based on the height H0 of the user U.

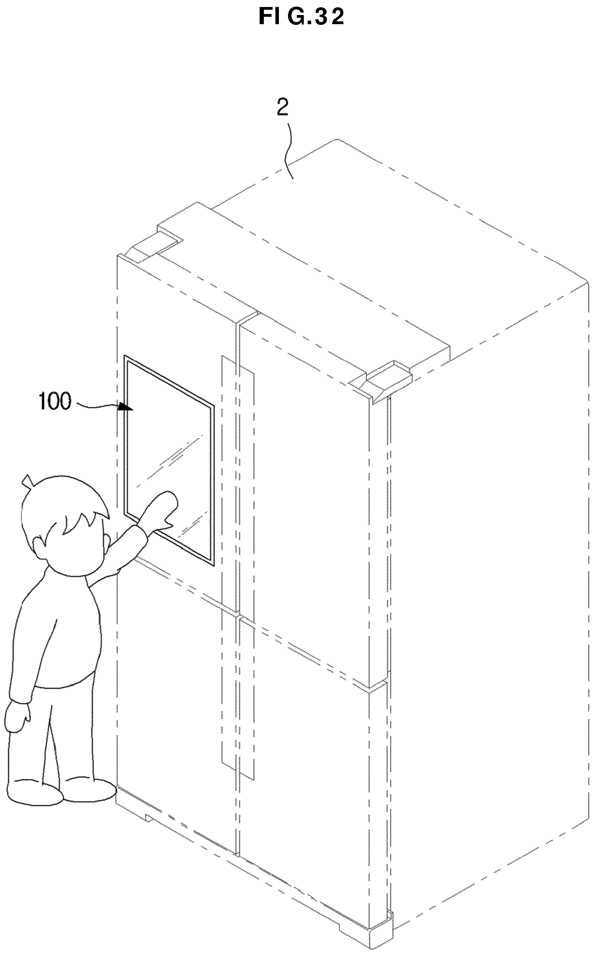

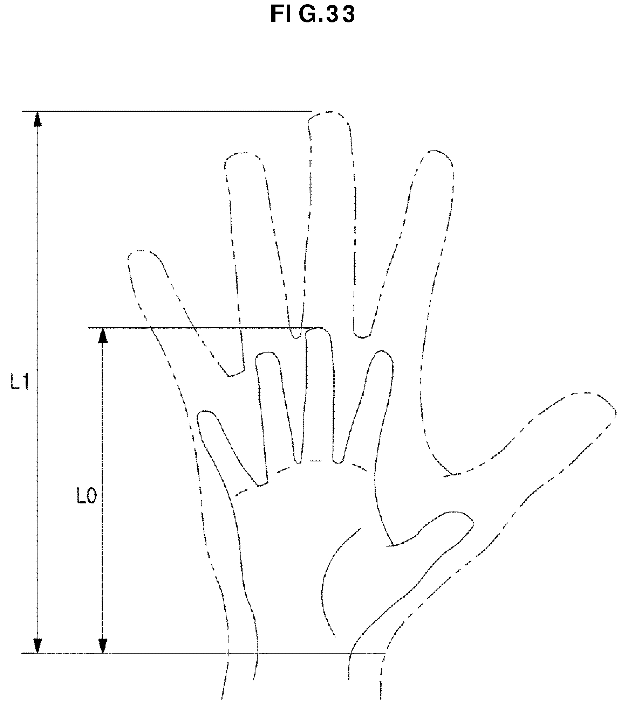

FIGS. 32 and 33 illustrate still another example of distinguishing a user by the electronic device according to another embodiment.

As illustrated in FIGS. 32 and 33, the electronic device 2 may distinguish the user U using the user interface 100.

Specifically, the electronic device 2 may measure a hand size of the user U using the user interface 100 and determine whether the user U is an adult or a child based on the measured hand size.

The electronic device 2 may guide the user U to touch the user interface 100 with a hand via the user interface 100.

When the user U touches the user interface 100 with a hand in accordance with guiding of the electronic device 2 as illustrated in FIG. 32, the electronic device 2 may detect coordinates of the touch point at which the hand of the user U has touched the user interface 100 via the user interface 100.

In addition, the electronic device 2 may determine the hand size of the user U based on the coordinates of the touch point detected by the user interface 100 and determine whether the user U is an adult or a child in accordance with the hand size.

For example, as illustrated in FIG. 33, the electronic device 2 may calculate a difference L0 between a maximum value and a minimum value of coordinates (e.g. Y-axis coordinates) of the touch point detected by the user interface 100 and determine the difference as the hand size of the user U. Specifically, a difference between a maximum value and a minimum value of coordinates of a touch point detected from an adult's hand is greater than a difference between a maximum value and a minimum value of coordinates of a touch point detected from a child's hand. Consequently, the electronic device 2 may determine that the user U is a child when the difference L0 between a maximum value and a minimum value of coordinates of a touch point is less than a reference value L1, and determine that the user U is an adult when the difference L0 between a maximum value and a minimum value of coordinates of a touch point is equal to or greater than the reference value L1.

As described above, the electronic device 2 may acquire the hand size of the user U using the user interface 100 and determine whether the user U is an adult or a child based on the hand size of the user U.

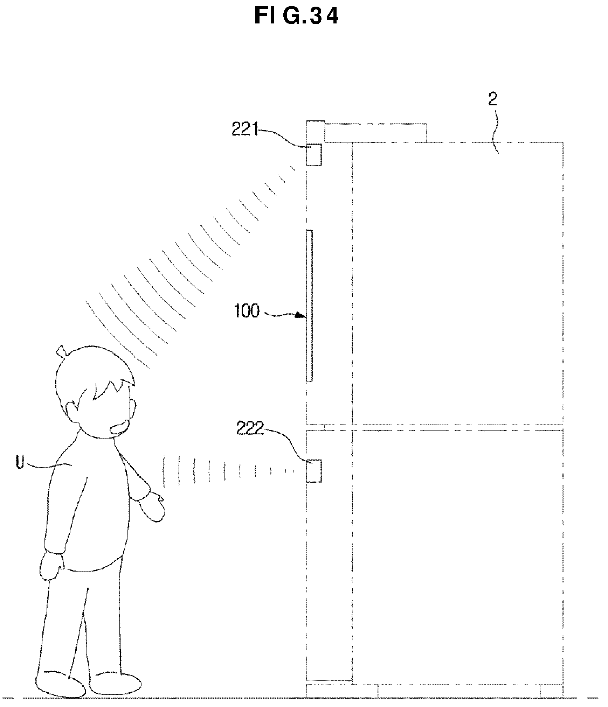

FIGS. 34, 35, and 36 illustrate yet another example of distinguishing a user by the electronic device according to another embodiment.

As illustrated in FIGS. 34, 35, and 36, the electronic device 2 may distinguish the user U using the ultrasonic sensor module 220.

The ultrasonic sensor module 220 may include a plurality of ultrasonic sensors 221 and 222 installed on a front surface of the electronic device 2 at different heights. For example, the ultrasonic sensor module 220 may include a first ultrasonic sensor 221 installed at an upper portion of the electronic device 2 and a second ultrasonic sensor 222 installed at a middle portion of the electronic device 2 as illustrated in FIG. 34.

The ultrasonic sensors 221 and 222 may transmit ultrasonic waves and receive the ultrasonic waves reflected from an object. Also, the ultrasonic sensors 221 and 222 may detect a time interval between the time at which the ultrasonic waves were transmitted and the time at which the ultrasonic waves were received.

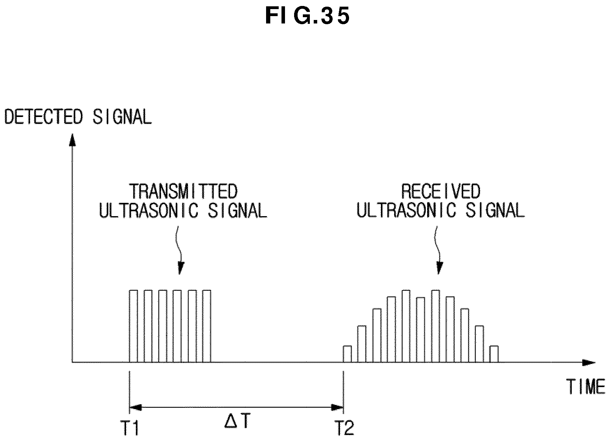

For example, as illustrated in FIG. 35, the first and second ultrasonic sensors 221 and 222 may output the ultrasonic waves at a first time T1 and detect the transmitted ultrasonic waves. The transmitted ultrasonic waves are reflected from the user U and returned to the ultrasonic sensors 221 and 222, and the first and second ultrasonic sensors 221 and 222 may receive the ultrasonic waves reflected from the user U at a second time T2. Also, the first and second ultrasonic sensors 221 and 222 may detect a time interval $\Delta T$ between the first time T1 and the second time T2. In other words, the first and second ultrasonic sensors 221 and 222 may detect the time interval $\Delta T$ between the time T1 at which the ultrasonic waves have been transmitted and the time T2 at which the reflected ultrasonic waves have been received.

In addition, the electronic device 2 may calculate distances D1 and D2 between the first and second ultrasonic sensors 221 and 222 and the user U based on the time interval $\Delta T$ between the transmission time T1 and the reception time T2 output by the ultrasonic sensors 221 and 222.

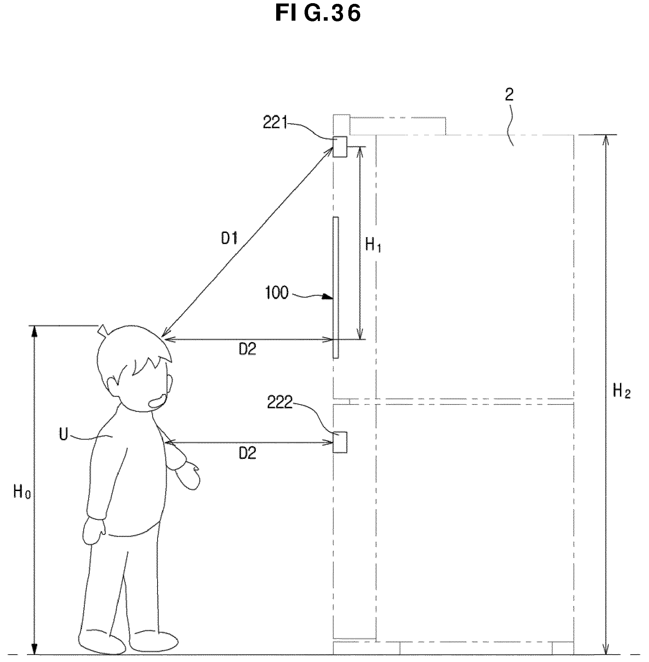

For example, as illustrated in FIG. 36, the electronic device 2 may calculate a first distance D1 between the first ultrasonic sensor 221 and the user U and a second distance D2 between the second ultrasonic sensor 222 and the user U.

In addition, the electronic device 2 may calculate the height H0 of the user U using the first distance D1, the second distance D2, and a height H2 at which the first ultrasonic sensor 221 is installed. For example, the electronic device 2 may calculate the height H0 of the user U using Equation 1 and Equation 2.

[Equation 1]

$$H_1 = \sqrt{D_1{}^2 - D_2{}^2}$$

(Here, H1 represents a difference between the height at which the first ultrasonic sensor is installed and the height of the user, D1 represents the first distance between the first ultrasonic sensor and the user, and D2 represents the second distance between the second ultrasonic sensor and the user.)

According to FIG. 36 and Equation 1, the difference H1 between the height H2 at which the first ultrasonic sensor 221 is installed and the height H0 of the user U may be calculated based on the first distance D1 and the second distance D2.

[Equation 2]

$$H_0 = H_2 - H_1$$

(Here, H0 represents the height of the user, H2 represents the height at which the first ultrasonic sensor is installed, and H1 represents the difference between the height of the user and the height at which the first ultrasonic sensor is installed.)

According to FIG. 36 and Equation 2, the height H0 of the user U may be calculated using the difference H1 between the height H2 at which the first ultrasonic sensor 221 is installed and the height of the user U and the height H2 at which the first ultrasonic sensor 221 is installed.

The electronic device 2 may determine whether the user U is an adult or a child based on the height H0 of the user U detected by the user recognition unit 200.

For example, the electronic device 2 may determine that the user U is an adult when the height H0 of the user U is equal to or taller than a reference height and determine that the user U is a child when the height H0 of the user U is smaller than the reference height.

As described above, the electronic device 2 may determine the height H0 of the user U using the ultrasonic sensor module 220 and determine whether the user U is an adult or a child based on the determined height H0 of the user U.

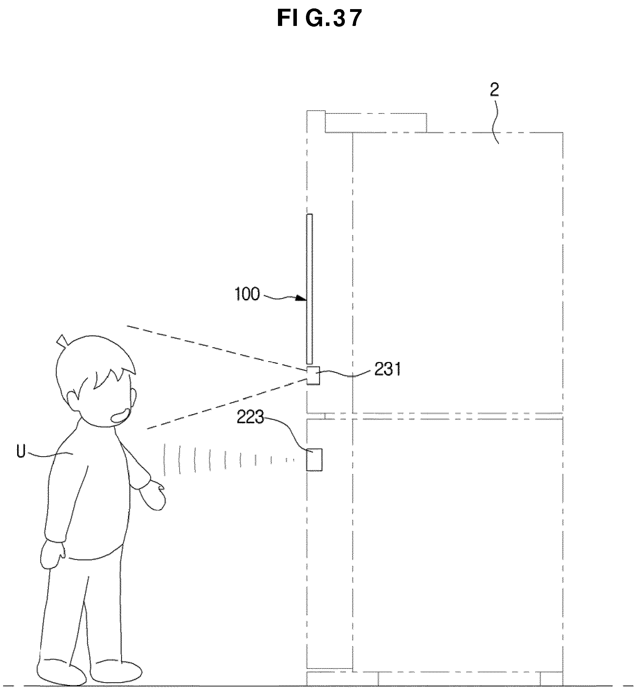

FIGS. 37, 38, and 39 illustrate yet another example of distinguishing a user by the electronic device according to another embodiment.

As illustrated in FIGS. 37, 38, and 39, the electronic device 2 may distinguish the user U using the ultrasonic sensor module 220 and the camera module 230.

The ultrasonic sensor module 220 may include a third ultrasonic sensor 223 installed on a front surface of the electronic device 2. The third ultrasonic sensor 223 may transmit ultrasonic waves and receive the ultrasonic waves reflected from an object. Also, the third ultrasonic sensor 223 may detect the time interval ΔT between the time at which the ultrasonic waves have been transmitted and the time at which the ultrasonic waves have been received.

The electronic device 2 may calculate a third distance D3 between the third ultrasonic sensor 223 and the user U based on the time interval ΔT between the time of transmitting the ultrasonic waves and the time of receiving the ultrasonic waves.

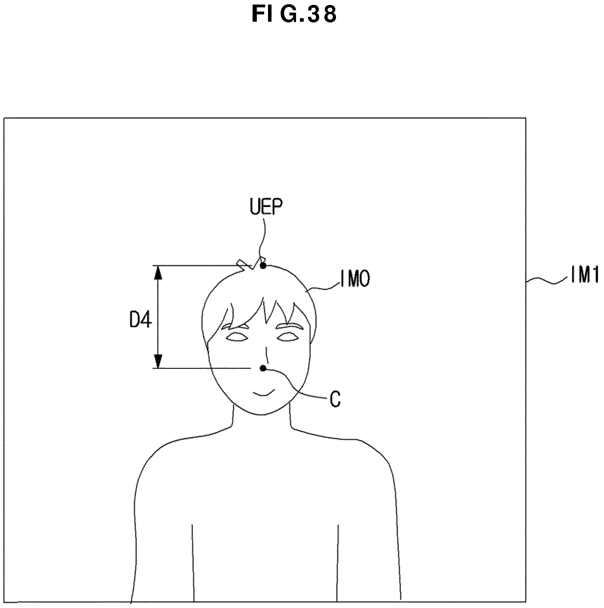

In addition, the camera module 230 may include a camera 231 installed on the front surface of the electronic device 2 to acquire a front-view image from the electronic device 2. The camera 231 may acquire a front-view image IM1 from the electronic device 2. The front-view image IM1 may include a user image IM0 as illustrated in FIG. 38.

The electronic device 2 may calculate the height H0 of the user U based on the front-view image acquired by the camera module 230.

For example, the electronic device 2 may extract an upper end UEP of the user image IM0 and acquire a fourth distance D4 between a center C of the front-view image IM1 and the upper end UEP of the user image IM0. Also, the electronic device 2 may calculate an elevation angle θ of the upper end (an upper end of the user's head) of the user U based on the fourth distance D4.

Here, the elevation angle θ refers to an angle formed between a gaze of an observer viewing an object and a horizontal surface. In other words, the elevation angle θ refers to an angle between an angle in which the camera 231 takes a picture of the upper end of the user U and the horizontal surface. Since the camera 231 is fixed to the electronic device 2 to take a picture of the front view from the electronic device 2, the electronic device 2 may determine the elevation angle θ of the object based on a distance between the center C of the front-view image IM1 and a position of the object in the front-view image IM1.

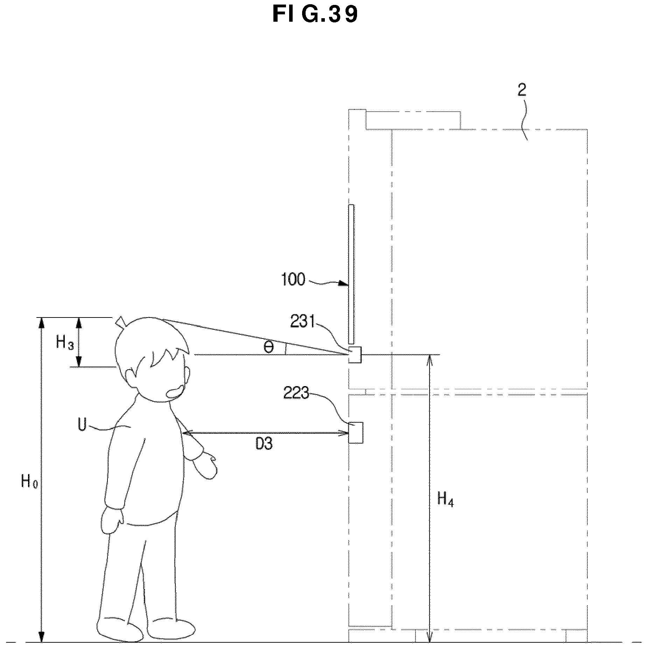

Consequently, the electronic device 2 may calculate the elevation angle θ of the upper end of the user U based on the fourth distance D4 between the center C of the front-view image IM1 and the upper end UEP of the user image IM0 as illustrated in FIG. 39.

In addition, the electronic device 2 may calculate the height H0 of the user U using the third distance D3 between the third ultrasonic sensor 223 and the user U, the elevation angle θ of the upper end of the user U, and a height H4 at which the camera 231 is installed. For example, the electronic device 2 may calculate the height H0 of the user U using Equation 3 and Equation 4.

[Equation 3]

$$H_3 = D_3 \times \tan \theta$$

(Here, H3 represents a difference between the height of the user and the height at which the camera is installed, D3 represents the third distance between the third ultrasonic sensor and the user, and θ represents the elevation angle of the upper end of the user.)

According to FIG. 39 and Equation 3, the difference H3 between the height H0 of the user U and the height at which the camera 231 is installed may be calculated using the third distance D3 and the elevation angle θ.

[Equation 4]

$$H_0 = H_3 + H_4$$

(Here, H0 represents the height of the user, H3 represents the difference between the height of the user and the height at which the camera is installed, and H4 represents the height at which the camera is installed.)

According to FIG. 39 and Equation 4, the height H0 of the user U may be calculated using the difference H3 between the height H0 of the user U and the height at which the camera 231 is installed and the height H4 at which the camera 231 is installed.

The electronic device 2 may determine whether the user U is an adult or a child based on the height H0 of the user U detected by the user recognition unit 200.

For example, the electronic device 2 may determine that the user U is an adult when the height H0 of the user U is equal to or greater than the reference height and may determine that the user U is a child when the height H0 of the user U is smaller than the reference height.

As described above, the electronic device 2 may determine the height H0 of the user U using the ultrasonic sensor module 220 and the camera module 230 and may determine whether the user U is an adult or a child based on the determined height H0 of the user U.

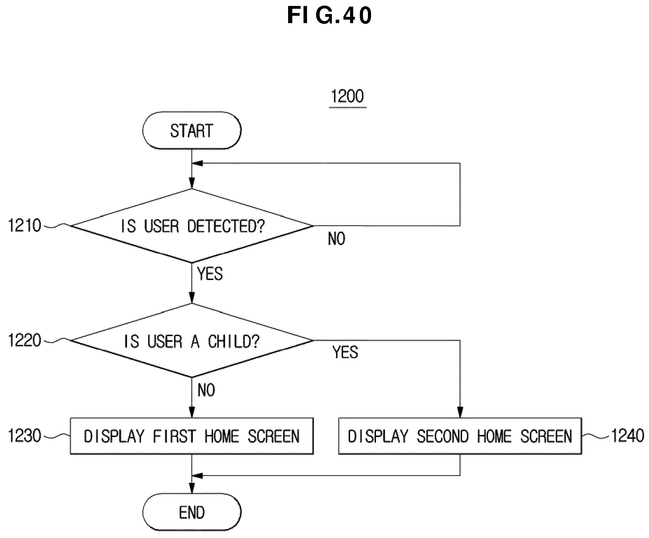

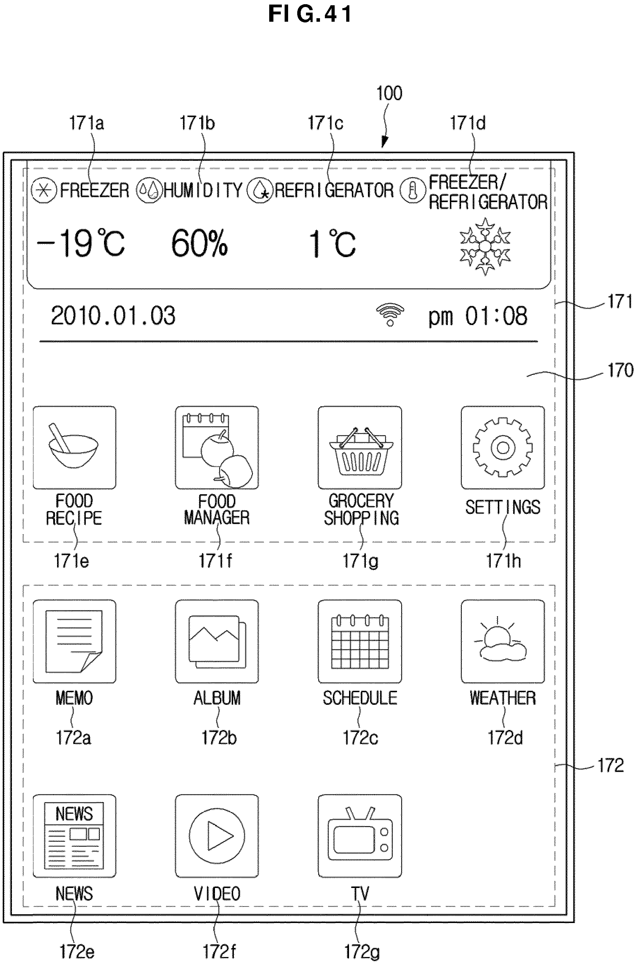

FIG. 40 illustrates an example of a method of displaying the user interface of the electronic device according to another embodiment, and FIGS. 41, 42A, 42B, 42C, 43, and 44 illustrate an example of a screen displayed on the user interface in accordance with the controlling method illustrated in FIG. 40.

Referring to FIGS. 40, 41, 42A, 42B, 42C, 43, and 44, a displaying method 1200 of the user interface 100 of the electronic device 2 will be described.

The electronic device 2 determines whether the user U is detected while being operated (S1210).

The electronic device 2 may detect the user U using various methods.

For example, the electronic device 2 may detect the user U using the user recognition unit 200. Specifically, when the infrared sensor module 210 detects infrared rays radiated from the user U, the electronic device 2 may detect the user U. Also, when the ultrasonic sensor module 220 detects reflected ultrasonic waves, the electronic device 2 may detect the user U. Also, when the front-view image IM1 acquired by the camera module 230 includes the user image IM0, the electronic device 2 may detect the user U.

In addition, the electronic device 2 may detect the user U using the user interface 100. Specifically, when the user interface 100 detects the touch input of the user U, the electronic device 2 may detect the user U.

When the user U is not detected (NO to S1210), the electronic device 2 continues to perform an operation that has was previously being performed.

In addition, when the user U is detected (YES to S1210), the electronic device 2 may determine whether the user U is a child (S1220).

Specifically, the electronic device 2 may determine whether the user U is a child using the user interface 100 or the user recognition unit 200.

For example, the electronic device 2 may determine whether the user U is an adult or a child based on the voice of the user acquired by the sound reception module 240.

In addition, the electronic device 2 may determine the height H0 of the user U using the infrared sensor module 210 and may determine whether the user U is an adult or a child based on the determined height H0 of the user U.

In addition, the electronic device 2 may acquire the hand size of the user U using the user interface 100 and may determine whether the user U is an adult or a child based on the hand size of the user U.

In addition, the electronic device 2 may determine the height H0 of the user U using the ultrasonic sensor module 220 and determine whether the user U is an adult or a child based on the determined height H0 of the user U.

In addition, the electronic device 2 may determine the height H0 of the user U using the ultrasonic sensor module 220 and the camera module 230 and determine whether the user U is an adult or a child based on the determined height H0 of the user U.

When the user U is not determined as a child (NO to S1220), the electronic device 2 may display a first home screen on the user interface 100 (S1230). For example, the first home screen may be the same as the home screen 110 illustrated in FIG. 5 (refer to FIG. 5).

When the user U is determined as a child (YES to S1220), the electronic device 2 may display a second home screen 170 on the user interface 100 (S1240).

Different from the first home screen 110 (refer to FIG. 5), arrangement of the launcher icons is changed in the second home screen 170. Also, some launcher icons may be deactivated or some launcher icons may not be displayed.

For example, the electronic device 2 may display the second home screen 170 as illustrated in FIG. 41.

According to FIG. 41, the launcher icons may be arranged in the second home screen 170, and the launcher icons may be aligned and arranged in accordance with applications executed by the launcher icons.

As described above, the launcher icons may be classified into a plurality of groups in accordance with the applications executed by the launcher icons. For example, the launcher icons may be classified into a first launcher icon group to execute applications directly related to an operation of the electronic device 2, a second launcher icon group to assist in the operation of the electronic device 2 or execute applications indirectly related to the operation of the electronic device 2, and a third launcher icon group to execute applications not related to the operation of the electronic device 2 that provide fun to or draw an interest from the user.

The first launcher icon group and the second launcher icon group may be disposed in a first area 171 of the second home screen 170, and the third launcher icon group may be disposed in a second area 172 of the second home screen 170. Specifically, temperature setting launcher icons 171a, 171c, and 171 d, and a humidity setting launcher icon 171b belonging to the first launcher icon group and a food recipe launcher icon 171e, a food manager launcher icon 171f, a grocery shopping launcher icon 171g, and a setting launcher icon 171 h belonging to the second launcher icon group may be disposed in the first area 171 of the second home screen 170.

In addition, a memo launcher icon 172a, an album launcher icon 172b, a schedule launcher icon 172c, a weather launcher icon 172d, a news launcher icon 172e, a video launcher icon 172f, and a broadcast launcher icon 172g belonging to the third launcher icon group may be disposed in the second area 172 of the second home screen 170.

In other words, the launcher icons 171 a to 171 h executing the applications related to the functions of the electronic device 2 may be disposed in the first area 171 of the second home screen 170, and the launcher icons 172a to 172g executing the applications not related to the functions of the electronic device 2 that provide fun to or draw an interest from the user may be disposed in the second area 172 of the second home screen 170.

By disposing the launcher icons belonging to the first and second launcher icon groups in the first area 171 of the second home screen 170 as described above, the user U who is a child may be prevented from executing the applications related to the functions of the electronic device 2.

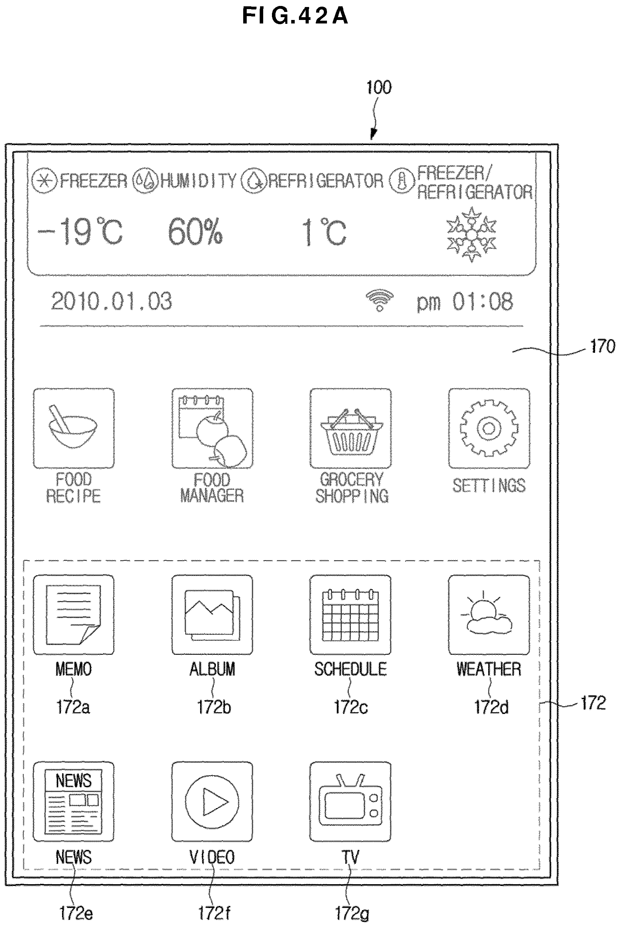

In another example, the electronic device 2 may display the second home screen 170 illustrated in FIG. 42A.

According to FIG. 42A, the launcher icons 171 a to 171 h belonging to the first and second launcher icon groups may be disposed in the first area 171 of the second home screen 170, and the launcher icons 172a to 172g belonging to the third launcher icon group may be disposed in the second area 172 of the second home screen 170.

In addition, the launcher icons 171a to 171h disposed in the first area 171 of the second home screen 170 may be deactivated. In other words, even when the user U touches the launcher icons 171 a to 171 h disposed in the first area 171 of the second home screen 170, the corresponding applications are not executed. For example, even when the user U touches the temperature setting launcher icons 171a, 171c, and 171 d or the humidity setting launcher icon 171b which are deactivated, the temperature setting applications or the humidity setting application are not executed.

Meanwhile, when the user U is determined as an adult, the launcher icons 171a to 171 h disposed in the first area 171 may be activated and may be disposed in various positions besides the first area such as the second area or the central area. Also, when the user U is an adult, the user may set a temperature of a refrigerator compartment, a freezer compartment, or a freezer/refrigerator compartment using the temperature setting launcher icons 171 a, 171c, and 171 d, and set a humidity level of the refrigerator compartment, the freezer compartment, or the freezer/refrigerator compartment using the humidity setting launcher icon 171b. By deactivating the launcher icons belonging to the first and second launcher icon groups as described above, the user U who is a child may be prevented from executing the applications related to the functions of the electronic device 2.

In addition, the first area 171 and the second area 172 of the second home screen 170 may be variable.

For example, when the electronic device 2 has detected the height H0 of the user U using the user recognition unit 200, the first area 171 and the second area 172 may change in accordance with the height H0 of the user U.

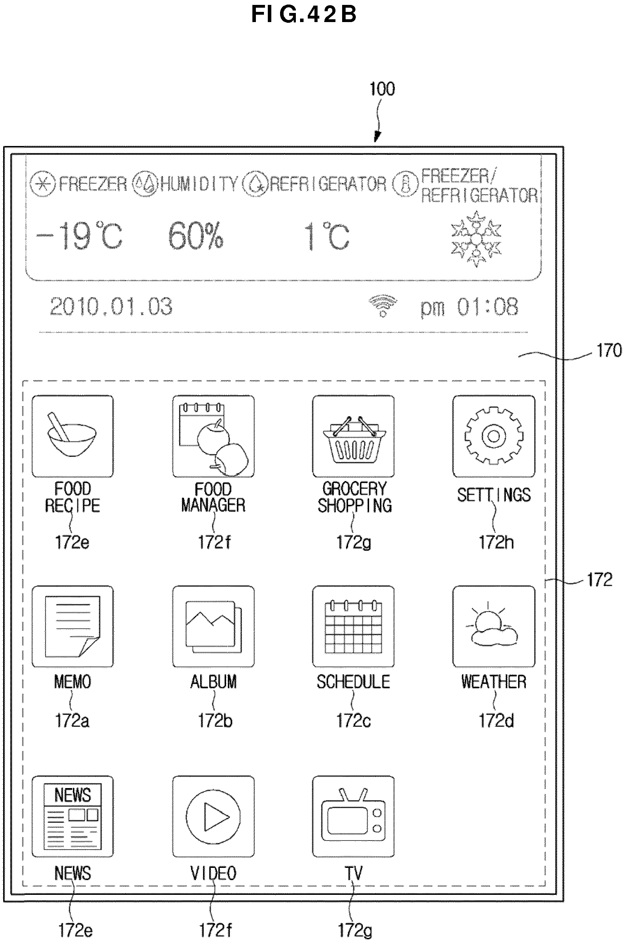

Specifically, when the height of the user U is taller than a first reference height (here, the first reference height may be a value greater than the reference height described above), a height touchable by the user U heightens. Consequently, the size of the second area 172 may be enlarged and the size of the first area 171 may be reduced as illustrated in FIG. 42B.

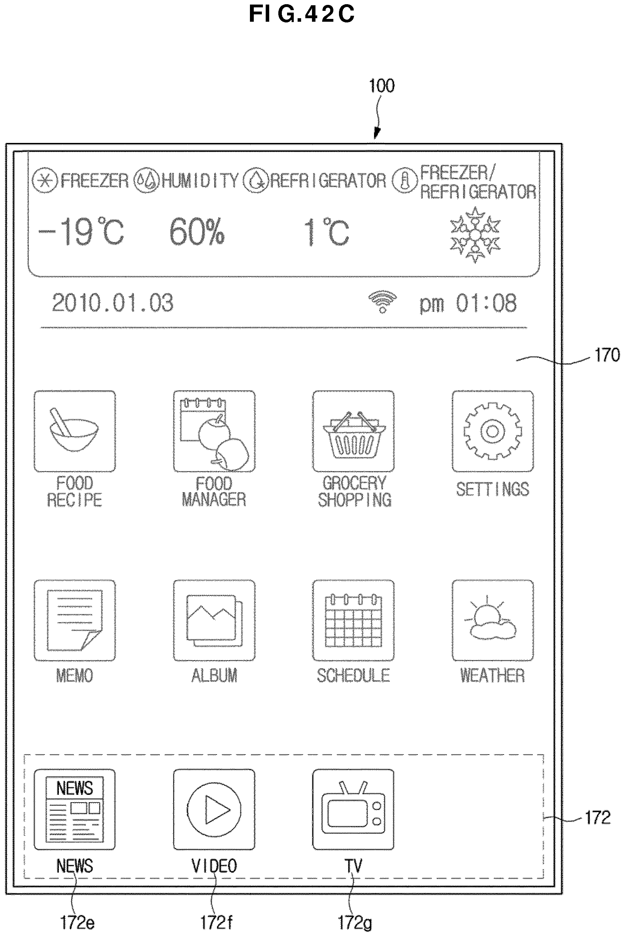

In addition, when the height of the user U is smaller than a second reference height (here, the second reference height may be a value smaller than the reference height described above), the height touchable by the user U lowers. Consequently, the size of the second area 172 may be reduced and the size of the first area 171 may be enlarged as illustrated in FIG. 42C.

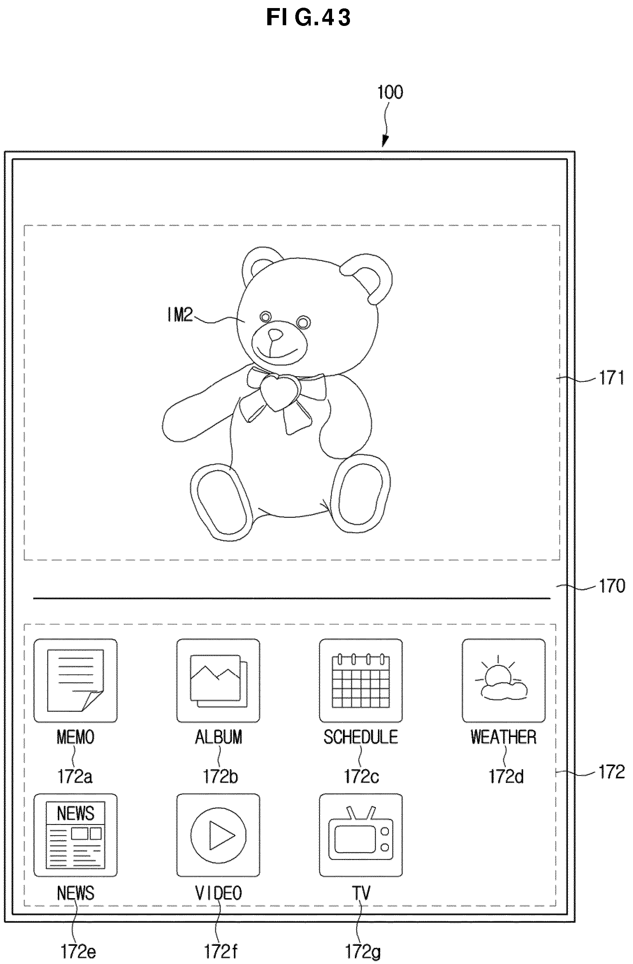

In still another example, the electronic device 2 may display the second home screen 170 illustrated in FIG. 43.

According to FIG. 43, an image IM2 may be displayed in the first area 171 of the second home screen 170, and the launcher icons 172a to 172g belonging to the third launcher icon group may be displayed in the second area 172 of the second home screen 170. Here, a stopped image or a video may be displayed in an upper portion of the second home screen 170, and an image selected by the user may also be displayed in the upper portion of the second home screen 170.

In other words, the electronic device 2 may not display the launcher icons 171 a to 171 h belonging to the first and second launcher icon groups on the second home screen 170.

By not displaying the launcher icons 171 a to 171 h belonging to the first and second launcher icon groups as described above, the user U who is a child may be prevented from executing the applications related to the functions of the electronic device 2.

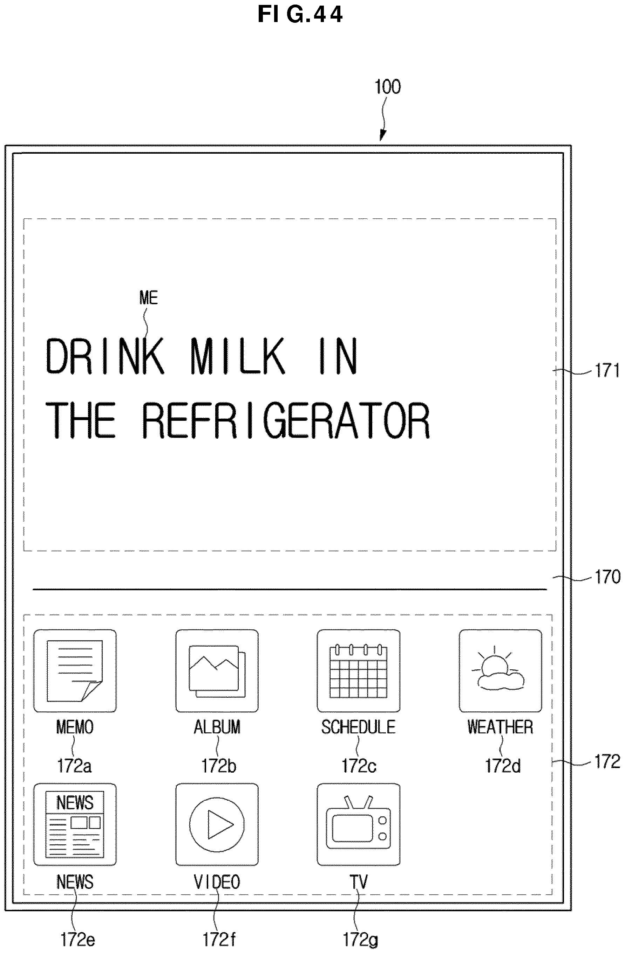

In yet another example, the electronic device 2 may display the second home screen 170 illustrated in FIG. 44.

According to FIG. 44, a message ME may be displayed in the first area 171 of the second home screen 170, and the launcher icons 172a to 172g belonging to the third launcher icon group may be displayed in the second area 172 of the second home screen 170. Here, a message input by the user via the memo application may be displayed in the upper portion of the second home screen 170.

In other words, the electronic device 2 may not display the launcher icons 171 a to 171 h belonging to the first and second launcher icon groups on the second home screen 170.

By not displaying the launcher icons 171 a to 171 h belonging to the first and second launcher icon groups as described above, the user U who is a child may be prevented from executing the applications related to the functions of the electronic device 2.

As described above, to prevent the user U from executing the applications related to the operation of the electronic device 2, the electronic device 2 may display the launcher icons belonging to the first and second launcher icon groups at the upper portion of the second home screen 170, deactivate the launcher icons belonging to the first and second launcher icon groups displayed on the second home screen 170, or not display the launcher icons belonging to the first and second launcher icon groups on the second home screen 170.

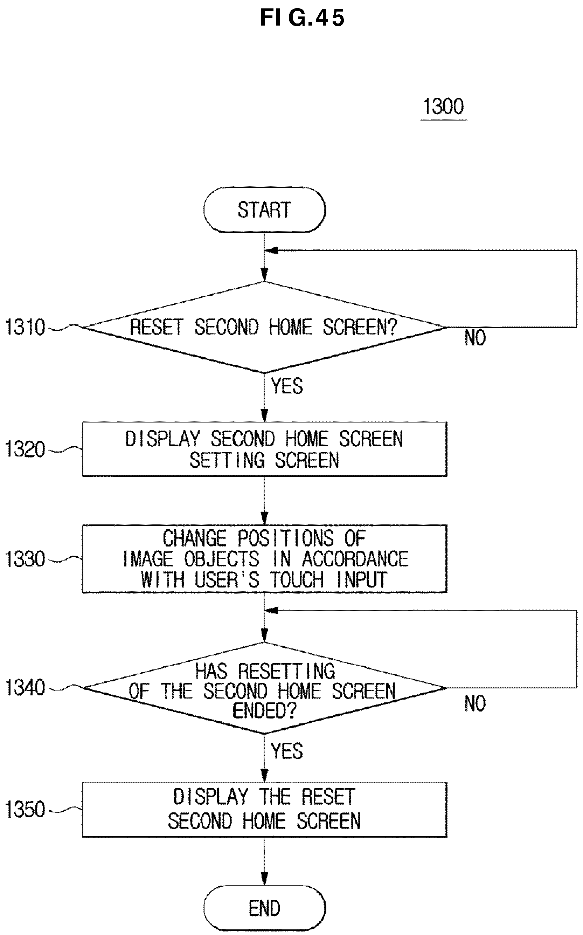

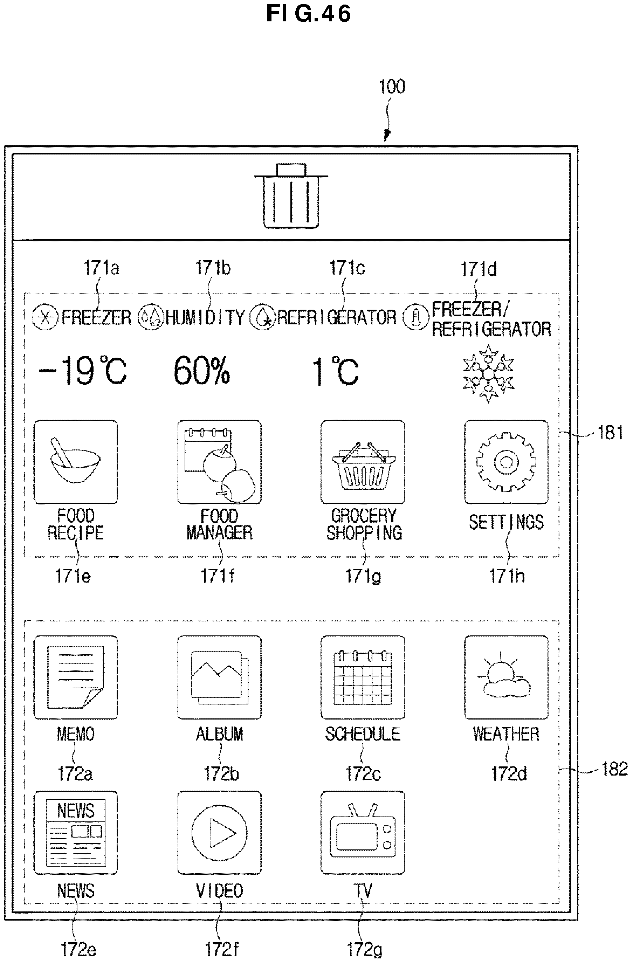

FIG. 45 illustrates another example of a displaying method of the user interface of the electronic device according to another embodiment, and FIGS. 46, 47, and 48 illustrate an example of a screen displayed on the user interface in accordance with the controlling method illustrated in FIG. 45.

Referring to FIGS. 45, 46, 47, and 48, a displaying method 1300 of the user interface 100 of the electronic device 2 will be described.

The electronic device 2 determines whether to reset the second home screen 170 (S1310). In other words, the electronic device 2 determines whether to rearrange the image objects (launcher icons, stopped images or videos, etc.) displayed on the second home screen 170.

The user U may change the arrangement of the launcher icons, images, or videos displayed on the second home screen 170 and may input a home screen setting command in order to change the arrangement of the launcher icons, images, or videos displayed on the second home screen 170.

For example, the user U may execute the setting application via the setting launcher icon displayed on the second home screen 170 and input the home screen setting command via the executed setting application.

In another example, the user U may quickly touch the user interface 100 twice or more, or touch the user interface 100 and keep touching it for a long time. Also, the user U may also simultaneously touch two or more points of the user interface 100.

When not determined to desire resetting the second home screen 170 (NO to S1310), the electronic device 2 continues to perform an operation that was previously being performed.

In addition, when determined to desire resetting the second home screen 170 (YES to S1310), a second home screen setting screen 180 is displayed on the user interface 100.

Here, the second home screen setting screen 180 is a screen for rearranging the image objects displayed on the second home screen 170 and may separately display the launcher icons belonging to the first and second launcher icon groups and the launcher icons belonging to the third launcher icon group.

For example, as illustrated in FIG. 46, the second home screen setting screen 180 may be divided into a first area 181 and a second area 182. The launcher icons 171a to 171 h displayed in the first area 171 of the second home screen 170 may be displayed in the first area 181, and the launcher icons 172a to 172g displayed in the second area 172 of the second home screen 170 may be displayed in the second area 182.

Then, the electronic device 2 changes the positions of the image objects in accordance with the user's touch input (S1330).

The user may change the positions of the image objects (launcher icons, stopped images, or videos) displayed on the second home screen 170.

For example, the user may touch an image object, move the touch point to a desired new position of the image object (hereinafter, this will be referred to as "dragging"), and end the touching when the touch point reaches the desired new position (hereinafter, this will be referred to as "dropping"). As a result, the dragged image object is rearranged to be positioned at the dropped position.

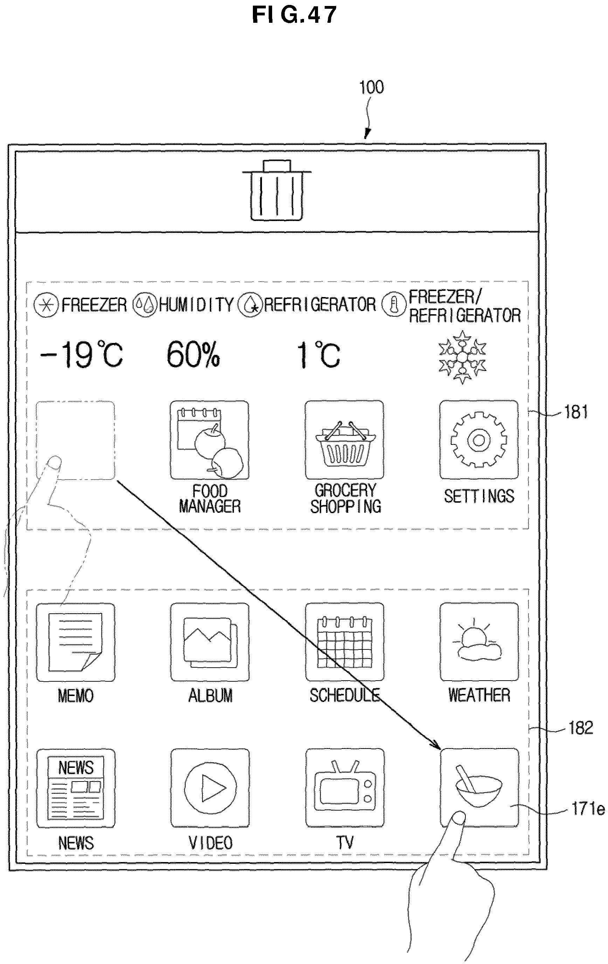

Specifically, when the user drags and drops the food recipe icon 171 e displayed in the first area 181 to the second area 182, the food recipe icon 171e is rearranged to be in the second area 182 as illustrated in FIG. 47.

In addition, the user may touch three or more points of the user interface 100, drag the three or more points to desired new positions, and drop the three or more points when they have reached the desired new positions. As a result, all image objects within the three or more touch points may be rearranged to the dropped positions.

Then, the electronic device 2 determines whether the resetting of the second home screen 170 has ended (S1340).

When the user has finished resetting the second home screen 170, the user may input a home screen setting end command for ending the resetting of the second home screen 170. For example, the user U may quickly touch the user interface 100 twice or more, or touch the user interface 100 and keep touching it for a long time. Also, the user U may also simultaneously touch two or more points of the user interface 100.

When the resetting of the second home screen 170 has not ended (NO to S1340), the electronic device 2 waits for the user's touch input for resetting the second home screen 170.

In addition, when the resetting of the second home screen 170 has ended (YES to S1340), the electronic device 2 displays the reset second home screen 170 (S1350).

Specifically, the electronic device 2 displays the second home screen 170 in which the image objects have been rearranged by the user on the user interface 100.

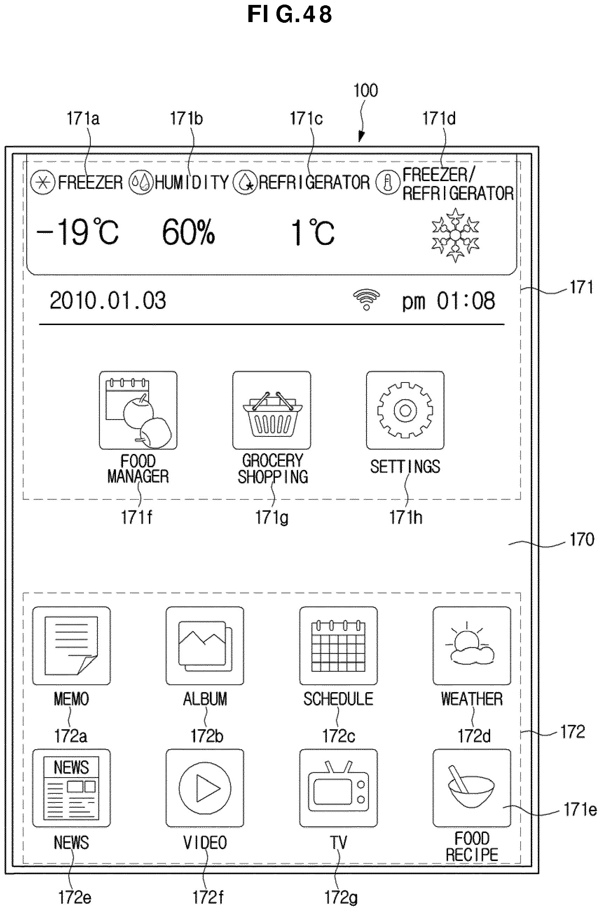

For example, when the food recipe icon 171e has been moved to the second area 172 by the touch input of the user U, the electronic device 2 may display the home screen 170 in which the food recipe icon 171e is displayed in the second area 172 on the user interface 100 as illustrated in FIG. 48.

As described above, the user may arrange the launcher icons in the first area 171 or the second area 172 of the second home screen 170 according to preference.

According to an aspect of the present disclosure, an electronic device and a displaying method thereof in which a user can easily use a launcher icon displayed in an upper portion of a display can be provided.

According to another aspect of the present disclosure, an electronic device and a displaying method thereof capable of providing different screens in accordance with whether a user is an adult or a child can be provided.

In the above, although few embodiments of the present disclosure have been shown and described, the present disclosure is not limited to the particular embodiments mentioned above. Various modifications are possible by those of ordinary skill in the art to which the present disclosure pertains without departing from the gist of the claims below, and the modified embodiments cannot be separately construed from the present disclosure.

**Claims**

1. A method of displaying an electronic device comprising a touch-sensitive display, the method comprising:

   displaying a screen including a first image object disposed in an upper portion of the touch-sensitive display and a second image object disposed in a lower portion thereof; and
   displaying a hidden menu on at least a portion of the screen when a predetermined touch input is received via the touch-sensitive display, wherein the hidden menu comprises the first image object.

2. The method according to claim 1, wherein the displaying of the hidden menu on at least a portion of the screen comprises displaying the hidden menu in the lower portion of the screen.

3. The method according to claim 1, further comprising deactivating the touch input in areas of the screen besides the hidden menu.

4. The method according to claim 1, wherein the displaying of the hidden menu in at least a portion of the screen when a predetermined touch input is received comprises, when a touch is detected in a predetermined first region and a position of the touch is moved, moving the hidden menu along with a movement of the position of the touch.

5. The method according to claim 4, wherein the first region comprises an edge portion of the screen.

6. The method according to claim 5, wherein the movement of the position of the touch comprises a movement of the position of the touch from the edge portion of the screen to the central portion of the screen.

7. The method according to claim 4, wherein the displaying of the hidden menu in at least a portion of the screen when a predetermined touch input is received further comprises displaying the hidden menu in at least a portion of the screen when the position of the touch reaches a predetermined second region.

8. The method according to claim 4, wherein the displaying of the hidden menu in at least a portion of the screen when a predetermined touch input is received further comprises displaying the hidden menu in at least a portion of the screen when the position of the touch moves by a predetermined distance.

9. The method according to claim 1, wherein the displaying of the hidden menu in at least a portion of the screen when a predetermined touch input is received comprises moving the hidden menu along with coordinates of the touch input.

10. An electronic device comprising:

   a touch-sensitive display;
   at least one processor; and
   a memory configured to store at least one program executed by the at least one processor,
   wherein the at least one processor is configured to display a screen including a first image object disposed in an upper portion of the touch-sensitive display and a second image object disposed in a lower portion thereof,
   the at least one processor is configured to display a hidden menu on at least a portion of the screen when a predetermined touch input is received via the touch-sensitive display, and
   the hidden menu comprises the first image object.

11. The electronic device according to claim 10, wherein the at least one processor is configured to display the hidden menu in the lower portion of the screen.

12. The electronic device according to claim 10, wherein the at least one processor is configured to deactivate the touch input in areas of the screen besides the hidden menu.

13. The electronic device according to claim 10, wherein , when a touch is detected in a predetermined first region of the touch-sensitive display and a position of the touch is moved, the at least one processor is configured to move the hidden menu along with a movement of the position of the touch.

14. The electronic device according to claim 13, wherein the first region comprises an edge portion of the screen.

15. The electronic device according to claim 14, wherein the movement of the position of the touch comprises a movement of the position of the touch from the edge portion of the screen to the central portion of the screen.

# FIG. 1

100

USER INTERFACE

101

DISPLAY PANEL

102

TOUCH PANEL

103

TOUCH SCREEN
CONTROLLER

10

MAIN CONTROLLER

11

MAIN PROCESSOR

13

MAIN MEMORY

# FIG.2

101

102

103

10

TOUCH SCREEN
CONTROLLER

MAIN
CONTROLLER

# FIG.3

# FIG.4

# FIG.5

100

2010.01.03                                  pm 01:08 ⟨——— 110

⊛FREEZER   ⧫⧫HUMIDITY   ◇REFRIGERATOR   ▯FREEZER/
                                                                    REFRIGERATOR

−19℃       60%        1℃              ❄        ——— 111
111a        111b        111c                    111d

MEMO        ALBUM       SCHEDULE      WEATHER
111e        111f        111g          111h

NEWS        VIDEO       TV
NEWS
112a        112b        112c          ——— 112

FOOD        FOOD        GROCERY       SETTINGS
RECIPE      MANAGER     SHOPPING
112e        112f        112g          112h

**FIG.6**

# FIG.7

1000

START

1010 — DISPLAY HIDDEN MENU?

NO

YES

1020 — DISPLAY HIDDEN MENU AT ONE PORTION OF HOME SCREEN

END

EP 3 076 281 A1

# FIG.8

100

2010.01.03 ⏶ pm 01:08

110

❄FREEZER ◐HUMIDITY ◐REFRIGERATOR ⊕FREEZER/REFRIGERATOR

-19℃  60%  1℃  ❄

| MEMO | ALBUM | SCHEDULE | WEATHER |

| NEWS | VIDEO |

120

2010.01.03

❄ FREEZER ◐ HUMIDITY

-19℃  60%

| FOOD RECIPE | FOOD MANAGER | MEMO | ALBUM |

U

U

# FIG.9A

100

2010.01.03      🛜   pm 01:08

110

❄FREEZER   💧HUMIDITY   ❄REFRIGERATOR   🌡FREEZER/ REFRIGERATOR

-19℃     60%     1℃     ❄

MEMO     ALBUM     SCHEDULE     WEATHER

120

2010.01.03      🛜   pm 01:08

111

❄FREEZER   💧FREEZER   ❄REFRIGERATOR   🌡FREEZER/ REFRIGERATOR

-19℃     60%     1℃     ❄

MEMO     ALBUM     SCHEDULE     WEATHER

## FIG.9B

# FIG.9C

100

2010.01.03                    pm 01:08                    110

⊛FREEZER   ⊚HUMIDITY   ⊙REFRIGERATOR ⊚FREEZER/
                                        REFRIGERATOR

−19℃       60%          1℃

MEMO        ALBUM       SCHEDULE      WEATHER

2010.01.03                    pm 01:08                    120

                                                          111

NEWS        VIDEO        TV

FOOD        FOOD         GROCERY      SETTINGS
RECIPE      MANAGER      SHOPPING

# FIG.9D

100

2010.01.03      📶    pm 01:08

110

✳FREEZER    💧HUMIDITY    💧REFRIGERATOR    🌡FREEZER/ REFRIGERATOR

-19℃     60%     1℃     ❄

MEMO     ALBUM     SCHEDULE     WEATHER

2010.01.03      📶    pm 01:08

120

FOOD RECIPE     FOOD MANAGER     GROCERY SHOPPING     SETTINGS

✳FREEZER    💧FREEZER    💧REFRIGERATOR    🌡FREEZER/ REFRIGERATOR

-19℃     60%     1℃     ❄

# FIG.9E

100

2010.01.03     pm 01:08

110

❄ FREEZER    💧 HUMIDITY    💧 REFRIGERATOR    FREEZER/REFRIGERATOR

-19℃     60%     1℃

MEMO     ALBUM     SCHEDULE     WEATHER

2010.01.03     pm 01:08

120

MEMO     ALBUM     SCHEDULE     WEATHER

NEWS     VIDEO     TV

# FIG.10

# FIG.11

# FIG.12

100

2010.01.03            📶   pm 01:08

110

（❋）FREEZER   （💧）HUMIDITY   （❄）REFRIGERATOR   （🌡）FREEZER/ REFRIGERATOR

-19℃      60%      1℃      ❄

MEMO      ALBUM      SCHEDULE      WEATHER

2010.01.03            📶   pm 01:08      130

（❋）FREEZER   （💧）FREEZER   （❄）REFRIGERATOR   （🌡）FREEZER/ REFRIGERATOR

111

-19℃      60%      1℃      ❄

MEMO      ALBUM      SCHEDULE      WEATHER

# FIG.13

100

2010.01.03       🛜   pm 01:08

110

❄ FREEZER   💧 HUMIDITY   🌀 REFRIGERATOR   🌡 FREEZER/
REFRIGERATOR

-19℃    60%    1℃      ❄

MEMO      ALBUM      SCHEDULE      WEATHER

NEWS      VIDEO      TV

U

2010.01.03            pm 01:08

140

❄ FREEZER   💧 FREEZER         🌡 FREEZER/
REFRIGERATOR

-19℃    60%    1℃      ❄

U

# FIG.14

# FIG.15

100

# FIG.16

100

2010.01.03　　　　　　　　　　　pm 01:08

110

⊛FREEZER　　◍HUMIDITY　　◍REFRIGERATOR　⊕FREEZER/
　　　　　　　　　　　　　　　　　　　　　　　　　　　　REFRIGERATOR

-19℃　　　　60%　　　　1℃　　　　❄

MEMO　　　　ALBUM　　　SCHEDULE　　WEATHER

NEWS

▷

120

2010.01.03

⊛FREEZER　　◍◍FREEZER　　◍

-19℃　　　　60%

FOOD
RECIPE

MEMO　　　　ALBUM

# FIG.17

100

110

2010.01.03　　　📶　pm 01:08

(✳)FREEZER　(💧)HUMIDITY　(❄)REFRIGERATOR　(🌡)FREEZER/REFRIGERATOR

-19℃　　60%　　1℃

MEMO　　ALBUM　　SCHEDULE　　WEATHER

120

2010.01.03　　　📶　pm 01:08

111

(✳)FREEZER　(💧)FREEZER　(❄)REFRIGERATOR　(🌡)FREEZER/REFRIGERATOR

-19℃　　60%　　1℃

MEMO　　ALBUM　　SCHEDULE　　WEATHER

U

U

# FIG.18

100

110

2010.01.03       📶   pm 01:08

❄FREEZER   💧HUMIDITY   💧REFRIGERATOR   🌡FREEZER/REFRIGERATOR

−19℃     60%     1℃     ❄

MEMO     ALBUM     SCHEDULE     WEATHER

NEWS     VIDEO

120

2010.01.03

❄ FREEZER   💧 HUMIDITY

−19℃     60%

FOOD RECIPE     FOOD MANAGER     MEMO     ALBUM

# FIG.19

100

| 2010.01.03 | 🛜 | pm 01:08 |

110

✳ FREEZER  💧 HUMIDITY  ❄ REFRIGERATOR  🌡 FREEZER/ REFRIGERATOR

−19℃    60%    1℃    ❄

MEMO    ALBUM    SCHEDULE    WEATHER

NEWS    VIDEO    TV

110b

110a

U

FOOD RECIPE    FOOD MANAGER    GROCERY SHOPPING    SETTINGS

110c

# FIG.20

FIG.21

# FIG.22

# FIG.23

1100

# FIG.24

100

NEWS President Obama says ⋯

U

150

| MEMO | ALBUM | SCHEDU | WEATHER |

U

110

| NEWS | VIDEO | TV |

| FOOD RECIPE | FOOD MANAGER | GROCERY SHOPPING | SETTINGS |

# FIG.25

100

151

NEWS    President Obama says …

152

SCHEDULE    At April 9, 2016, …

150

111e    111f    111g    111h

MEMO    ALBUM    SCHEDULE    WEATHER

153

51

# FIG.26

100

2010.01.03      🛜    pm 01:08

✳FREEZER   💧HUMIDITY   REFRIGERATOR   FREEZER/ REFRIGERATOR

-19℃      60%      1℃

MEMO      ALBUM      SCHEDULE      WEATHER

110

U

160

MEMO      ALBUM      SCHEDULE      WEATHER

52

# FIG.27

100

160

| NEWS | President Obama says ⋯ |

162

| SCHEDULE | At April 9, 2016, ⋯ |

161

MEMO  ALBUM  SCHEDULE  WEATHER

163

111e  111f  111g  111h

# FIG.28

2

100 — USER INTERFACE
- 101 DISPLAY PANEL
- 102 TOUCH PANEL
- 103 TOUCH SCREEN CONTROLLER

10 — MAIN CONTROLLER
- 11 MAIN PROCESSOR
- 13 MAIN MEMORY

200 — USER RECOGNITION UNIT
- 210 INFRARED SENSOR MODULE
- 220 ULTRASONIC SENSOR MODULE
- 230 CAMERA MODULE
- 240 SOUND RECEPTION MODULE

# FIG.29

# FIG.30

2

100

211

212

213

214

215

210

# FIG.31

# FIG.32

# FI G.3 3

# FI G.3 4

# FIG.35

DETECTED SIGNAL

TRANSMITTED
ULTRASONIC SIGNAL

RECEIVED
ULTRASONIC SIGNAL

TIME

T1     ΔT     T2

# FIG.36

# FI G.37

# FIG.38

# FIG.39

# FIG.40

1200

START

1210 — IS USER DETECTED? — NO

YES

1220 — IS USER A CHILD? — YES

NO

1230 — DISPLAY FIRST HOME SCREEN

DISPLAY SECOND HOME SCREEN — 1240

END

# FIG.41

# FIG.42A

100

(*) FREEZER  (◊) HUMIDITY  (◊) REFRIGERATOR  (🅑) FREEZER/
REFRIGERATOR

-19℃      60%      1℃      ❄

2010.01.03                    📶    pm 01:08

170

FOOD RECIPE

FOOD MANAGER

GROCERY SHOPPING

SETTINGS

MEMO
172a

ALBUM
172b

SCHEDULE
172c

WEATHER
172d

172

NEWS
172e

VIDEO
172f

TV
172g

# FIG.42B

100

FREEZER   HUMIDITY   REFRIGERATOR   FREEZER/
REFRIGERATOR

-19℃    60%    1℃

2010.01.03              pm 01:08

170

FOOD
RECIPE
172e

FOOD
MANAGER
172f

GROCERY
SHOPPING
172g

SETTINGS
172h

172

MEMO
172a

ALBUM
172b

SCHEDULE
172c

WEATHER
172d

NEWS
172e

VIDEO
172f

TV
172g

# FIG.42C

100

⊛ FREEZER ⊘ HUMIDITY ⊘ REFRIGERATOR ⊘ FREEZER/REFRIGERATOR

-19℃     60%     1℃

2010.01.03          📶   pm 01:08

170

FOOD RECIPE

FOOD MANAGER

GROCERY SHOPPING

SETTINGS

MEMO

ALBUM

SCHEDULE

WEATHER

NEWS

VIDEO

TV

172

172e        172f        172g

# FIG.43

# FIG.44

100

ME

# DRINK MILK IN
# THE REFRIGERATOR

171

170

MEMO
172a

ALBUM
172b

SCHEDULE
172c

WEATHER
172d

172

NEWS
172e

VIDEO
172f

TV
172g

# FIG.45

1300

```
                    ┌──────────┐
                    │  START   │
                    └──────────┘
                         │
                         │←─────────────────────┐
                         ▼                       │
                      ╱─────╲                    │
        1310 ───  ╱ RESET SECOND HOME ╲   NO     │
                 ╲    SCREEN?         ╱──────────┘
                      ╲─────╱
                         │ YES
                         ▼
        1320 ──  ┌──────────────────────┐
                 │ DISPLAY SECOND HOME  │
                 │   SCREEN SETTING     │
                 │       SCREEN         │
                 └──────────────────────┘
                         │
                         ▼
        1330 ──  ┌──────────────────────┐
                 │ CHANGE POSITIONS OF  │
                 │ IMAGE OBJECTS IN     │
                 │ ACCORDANCE WITH      │
                 │ USER'S TOUCH INPUT   │
                 └──────────────────────┘
                         │
                         │←─────────────────────┐
                         ▼                       │
                      ╱─────╲                    │
        1340 ───  ╱ HAS RESETTING OF ╲   NO      │
                 ╲ THE SECOND HOME    ╱──────────┘
                 ╲ SCREEN ENDED?     ╱
                      ╲─────╱
                         │ YES
                         ▼
        1350 ──  ┌──────────────────────┐
                 │  DISPLAY THE RESET   │
                 │  SECOND HOME SCREEN  │
                 └──────────────────────┘
                         │
                         ▼
                    ┌──────────┐
                    │   END    │
                    └──────────┘
```

# FIG.46

# FIG.47

100

※FREEZER 🜄HUMIDITY ❄REFRIGERATOR ▯FREEZER/
REFRIGERATOR

−19℃    60%    1℃

181

FOOD MANAGER    GROCERY SHOPPING    SETTINGS

MEMO    ALBUM    SCHEDULE    WEATHER

182

NEWS    VIDEO    TV

171e

# FIG.48

Europäisches
Patentamt

European
Patent Office

Office européen
des brevets

# EUROPEAN SEARCH REPORT

**Application Number**

EP 16 16 3157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/169749 A1 (GANEY HARRISS C [US] ET AL) 14 July 2011 (2011-07-14) * paragraph [0001] - paragraph [0026] * ----- | 1-15 | INV. G06F3/0488 G06F3/0482 |
| A | US 2009/070670 A1 (KISHI NOBUYA [JP]) 12 March 2009 (2009-03-12) * paragraph [0002] - paragraph [0014] * * paragraph [0032] - paragraph [0035] * ----- | 1-15 | |

**TECHNICAL FIELDS SEARCHED (IPC)**

G06F

The present search report has been drawn up for all claims

| Place of search | Date of completion of the search | Examiner |
|---|---|---|
| Munich | 27 July 2016 | Anticoli, Claud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 16 3157

This annex lists the patent family members relating to the patent documents cited in the above-mentioned European search report.
The members are as contained in the European Patent Office EDP file on
The European Patent Office is in no way liable for these particulars which are merely given for the purpose of information.

27-07-2016

| Patent document cited in search report | | Publication date | Patent family member(s) | | Publication date |
|---|---|---|---|---|---|
| US 2011169749 | A1 | 14-07-2011 | CN | 102129312 A | 20-07-2011 |
| | | | DE | 102010060975 A1 | 17-01-2013 |
| | | | US | 2011169749 A1 | 14-07-2011 |
| US 2009070670 | A1 | 12-03-2009 | CN | 101382868 A | 11-03-2009 |
| | | | JP | 4412737 B2 | 10-02-2010 |
| | | | JP | 2009064209 A | 26-03-2009 |
| | | | US | 2009070670 A1 | 12-03-2009 |

EPO FORM P0459

For more details about this annex : see Official Journal of the European Patent Office, No. 12/82